(19) Europäisches Patentamt
European Patent Office
Office européen des brevets

(11) **EP 4 279 235 B1**

(12) **EUROPEAN PATENT SPECIFICATION**

(45) Date of publication and mention
of the grant of the patent:
**04.03.2026 Bulletin 2026/10**

(51) International Patent Classification (IPC):
**B27D 1/10** *(2006.01)*

(52) Cooperative Patent Classification (CPC):
**B27C 5/00; B23D 45/10; B27B 5/24; B27B 5/246;**
**B27F 1/02; B27F 1/06; B27M 3/0026;** B27D 5/006

(21) Application number: **21919542.7**

(22) Date of filing: **09.11.2021**

(86) International application number:
**PCT/JP2021/041070**

(87) International publication number:
**WO 2022/153651 (21.07.2022 Gazette 2022/29)**

(54) **SCARFING MACHINE AND METHOD OF SCARFING**

SCHÄLMASCHINE UND VERFAHREN ZUM SCHÄLEN

MACHINE À ÉCHARPER ET MÉTHODE D'ÉCHARPAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.01.2021 JP 2021003220**

(43) Date of publication of application:
**22.11.2023 Bulletin 2023/47**

(73) Proprietor: **Meinan Machinery Works, Inc.**
**Obu-shi,**
**Aichi 474-8543 (JP)**

(72) Inventors:
• **INOUE Shinya**
  **Obu-shi Aichi 474-8543 (JP)**
• **NINOMIYA Michito**
  **Obu-shi Aichi 474-8543 (JP)**
• **KOIKE Yasuhiro**
  **Obu-shi Aichi 474-8543 (JP)**

(74) Representative: **Global IP Europe**
**Patentanwaltskanzlei**
**Pfarrstraße 14**
**80538 München (DE)**

(56) References cited:
JP-A- H06 122 101    JP-B2- 4 275 773
JP-B2- 4 934 064     JP-B2- 5 683 969
JP-B2- 6 556 669     US-A- 3 080 895
US-A- 3 229 732      US-A- 3 380 494
US-A- 3 388 727      US-A- 4 931 113
US-A- 6 089 297      US-A1- 2019 240 860
US-B2- 8 726 513

**Description**

BACKGROUND

Field of the Invention

The present invention relates to a scarfing machine for machining a scarf surface at an edge of a wooden board material, according to the preamble of claim 1, and to a method of machining a scarf surface at an edge of a wooden board material, according to the preamble of claim 6. Such a machine and such a method are known from the document US 3 229 732 A.

Description of the Related Art

Japanese Patent Application Laid-Open No. 2000-804 (Patent Document 1) describes a scarfing machine for machining a scarf surface, by a circular saw, at an edge of a wooden board material in a direction intersecting the fiber direction of the board material. In said scarfing machine, the circular saw is angled downward in the direction of machining of the scarf surface (hereinafter, referred to as "heeling").
In the above-mentioned publication, the heeling prevents the blades of the circular saw used for the scarfing from coming into contact again with the scarf surface again after the machining. Hence, any roughness on the scarf surface is unlikely to occur.
US 3 229 732 A discloses a scarfing machine for machining a scarf surface at an edge of a wooden board material, the edge extending in a direction intersecting a fiber direction of the board material, the scarfing machine comprising: a holding unit configured to hold the board material with at least the edge of the board material protruding; a machining unit including a motor having a rotary shaft, and a disc cutter having a plurality of blades and connected to the rotary shaft, the machining unit positioned such that, on a virtual projection plane when viewed from one side of the extending direction of the edge of the board material, a projection of the edge of the board material intersects with a projection of the cutter; a supporting unit configured to support the machining unit in a state where the cutter is tilted at a first tilt angle relative to the board material so as to obtain the scarf surface of a desired scarf ratio and also where the cutter is tilted at a second tilt angle relative to the board material so as to set the cutter to tilt downward in the direction of machining the scarf surface; and a driving unit mechanically connected to the holding unit or the supporting unit and configured to move the holding unit relative to the supporting unit or move the supporting unit relative to the holding unit along the extending direction of the edge of the board material, wherein the second tilt angle has a value which has been calculated based on the relative positional relationship between a rotation axis of the cutter and the scarf surface, a camber of the scarf surface having an arc concavity, the scarf ratio, a diameter of the cutter, and a thickness of the board material.

CITATION LIST

[Patent Literature] Japanese Patent Application Laid-Open No. 2000-804

BRIEF SUMMARY

The greater the downward angle of the circular saw (hereinafter, referred to as "heeling angle"), the more reliably the blades of the circular saw used for scarfing can be prevented from coming into contact again with the scarf surface after the machining (hereinafter, referred to as "double cutting"). The heeling in scarfing, however, creates a concave arc in the resulting scarf surface. Also, a larger heeling angle increases a larger curvature of the concave arc. An excess curvature of the concave arc may cause the scarf surface to come into only partial contact with another scarf surface when these scarf surfaces are joined together in a post-process, resulting in poor joining. In contrast, a concave arc surface of an appropriate curvature can retain an adhesive (pocket effect), and thereby it is often preferable for a scarf surface to have an appropriate arc concavity in terms of good joining with the other scarf surface.
The present invention has been made in view of the above, and an object of the present invention is to provide a technique that contributes to both prevention of double cutting of a scarf surface and securing of a scarf surface having an appropriate arc surface.
A scarfing machine of the present invention employs the following means to achieve the above object.
A scarfing machine according to the present invention is configured to machine a scarf surface at an edge of a wooden board material, the edge extending in a direction intersecting a fiber direction of the board material. The scarfing machine includes a holding unit, a machining unit, a supporting unit, and a driving unit. The holding unit is configured to hold the board material with at least an edge of the board material protruding. The machining unit includes a motor having a rotary shaft, and a disc cutter having a plurality of blades and connected to the rotary shaft. The machining unit is positioned such that, on a virtual projection plane when viewed from one side of the extending direction of the edge of the board material, a projection of the edge of the board material intersects with a projection of the cutter. The supporting unit is configured to support the machining unit in a state where the cutter is tilted at a first tilt angle relative to the board material so as to obtain the scarf surface of a desired scarf ratio and also where the cutter is tilted at a second tilt angle relative to the board material so as to set the cutter to tilt downward in the direction of machining the scarf surface. The driving unit is mechanically connected to the holding unit or the supporting unit and configured to move the holding unit relative to the supporting unit or move the supporting unit relative to the holding unit along the extending direction of the edge of the board material. The second tilt angle has a value which has been calculated based on the relative positional relationship between a rotation axis of the cutter and the scarf surface, a camber of the scarf surface having an arc concavity, a scarf ratio, a diameter of the cutter, and a thickness of the board material. Accordingly, a scarf surface can be machined to have a desired arc concavity. Here, the scarf ratio in the present invention is defined as a ratio between the length of the scarf surface and the thickness of a board material: the length being along the fiber direction of a projection of the scarf surface on a virtual projection plane when viewed from one side in the thickness direction of the board material. The phrase "connected to the rotary shaft" in the present invention preferably includes an aspect in which the cutter is directly connected to the rotary shaft as well as an aspect in which the cutter is indirectly connected to the rotary shaft. As an example of the aspect in which the cutter is indirectly connected to the rotary shaft, the cutter may be connected to the rotary shaft via a reduction gear. The "direction of machining" in the present invention means a direction intersecting the fiber direction of the board material, that is, the extending direction of the edge of the board material, and also it corresponds to the direction in which the machining of the scarf surface progresses.

According to the present invention, since the cutter is angled downward at the second tilt angle in the direction of machining the scarf surface, the cutting blades that have machined the scarf surface can be well prevented from coming into contact again with the machined scarf surface. In addition, when machining the scarf surface, the cutter acts with a cutting force in a direction to press the board material into the board thickness direction, which can well decrease deformations of the board material such as warp and waviness. Furthermore, the second tilt angle has a value calculated based on the relative positional relationship between the rotation axis of the cutter and the scarf surface, a camber of the scarf surface with an arc concavity, a scarf ratio, the diameter of the cutter, and a thickness of the board material. Accordingly, the scarf surface can be machined to have a desired arc concavity. Hence, no increase in the curvature of the scarf surface having an arc concavity occurs, and the arc concavity can be appropriate. In other words, when the scarf surface is joined to another scarf surface in a post-process, the risk can be well reduced that the scarf surfaces only partially contact each other, and also the arc concavity is secured to have a curvature appropriate to retain an adhesive therein (pocket effect). As a result, the scarf surfaces can be well joined each other.

According to the present invention, the machining unit is arranged such that the rotation axis of the cutter passes through the center of the arc length of the scarf surface. The second tilt angle has a value that satisfies the following Equation,

[Equation 1]

$$h = \frac{R}{2} \cdot \sin\theta_2 - \sqrt{\sin^2\theta_2 \cdot \frac{R^2 - t^2(1 + i^2)}{4}} \quad (1)$$

where $\theta_2$ is the second tilt angle, h is a desired camber of the scarf surface, i is a desired scarf ratio of the scarf surface, R is a desired diameter of the cutter, and t is a desired thickness of the board material. Here, the "center of the arc length" in the present invention typically corresponds to the center of the arc length of the scarf surface, but encompasses approximately the center of the arc length in a projection of the scarf surface.

Thus, according to the present invention, the second tilt angle can be easily calculated for obtaining a scarf surface with an appropriate arc concavity: the second tilt angle can lead to reduction in the risk that the scarf surface only partially contacts with another scarf surface, and also to an arc concavity that has a curvature appropriate to retain an adhesive in the scarf surface (pocket effect). Since the machining unit is arranged such that the rotation axis of the cutter passes approximately through the center of the arc length of the scarf surface, a component of the cutting force of the cutter, which presses the board material in the board thickness direction, can be applied to approximately the center of the arc length of the scarf surface. In addition, at the center in the longitudinal direction of a slope of the scarf surface, the direction in which the cutting force of the cutter acts (the direction in which the blades pass) can be almost the same as the fiber direction of the board material. As a result, when a scarf surface is machined, the cutting force is less likely to act in the direction intersecting the fiber direction, which well decreases damages of the scarf surface in the direction intersecting the fiber direction.

Alternatively, according to the present invention, the machining unit is arranged such that the rotation axis of the cutter passes through the tip of the scarf surface. The second tilt angle has a value that satisfies the following Equations (2) to (6),
[Equation 2]

$$h_1 = h_3 \bullet \cos \alpha \quad (2)$$

$$\alpha = \sin^{-1}\left(\frac{\frac{R}{2} \bullet \sin \theta_2 - y_4}{t^2 (i^2 + 1)}\right) \quad (3)$$

$$y_4 = \frac{-R\sin \theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - t^2(i^2 + 1)\right)}}{2\left(1 - \frac{1}{\sin^2\theta_2}\right)} \quad (4)$$

$$h_3 = |y_5| - \left|-\frac{R}{2} \bullet \sin \theta_2\right| \quad (5)$$

$$y_5 = -\frac{R}{2} \bullet \sqrt{\tan^2\alpha + \sin^2\theta_2} \quad (6)$$

where $\theta_2$ is the second tilt angle, $h_1$ is a desired camber of the scarf surface, i is a desired scarf ratio of the scarf surface, R is a desired diameter of the cutter, and t is a desired thickness of the board material. Here, the "tip of the scarf surface" in the present invention typically corresponds to the edge of a projection of a scarf surface in the fiber direction of the board material on a virtual projection plane when viewed from one side in the thickness direction of the board material.

According to the present invention, the second tilt angle can be easily calculated for obtaining a scarf surface with an appropriate arc concavity: the second tilt angle can lead to reduction in the risk that the scarf surface only partially contacts with another scarf surface, and also to an arc concavity that has a curvature appropriate to retain an adhesive in the scarf surface. Since the machining unit is arranged so that a projection of the rotation axis of the cutter passes through the tip of the scarf surface, the force, which is a component of the cutting force of the cutter and presses the board material in the board thickness direction, can be applied to the tip of the scarf surface, the tip being the thinnest and most fragile part of the scarf surface. In addition, at the tip of the scarf surface, the direction in which the cutting force of the cutter acts (the direction in which the blades pass) can be almost the same as the fiber direction of the board material. As a result, at the thinnest tip of the scarf surface, the cutting force is less likely to act in the direction intersecting the fiber direction, which well decreases damages of the tip of the scarf surface in the direction intersecting the fiber direction.

According to an embodiment of the scarfing machine of the present invention, the plurality of blades is flat.

According to the present embodiment, all of the blades each cause a component of the cutting force to act in the direction to press the board material. Hence, deformations of the board material such as warp and waviness can be well decreased. As a result, a further improved scarf surface can be obtained.

According to another embodiment of the scarfing machine of the present invention, the cutter has a first surface toward a side where a board material is placed and a second surface facing in the direction opposite to the first side. The scarfing machine further includes a first reinforcing disc that is arranged in contact with the first surface. Here, the "side where a board material is placed" is defined as a side where a board material is placed when a scarf surface is machined on it by a cutter.

According to the present embodiment, the cutter is angled downward in the direction of machining a scarf surface. Hence, the cutter has an enhanced stiffness against a bending force acting on the cutter. Here, the cutter is angled downward in the direction of machining of a scarf surface, avoiding the first reinforcing disc from contacting the board material (scarf surface).

According to another embodiment of the scarfing machine of the present invention, the scarfing machine further includes a second reinforcing disc that is arranged in contact with the second surface.

According to the present embodiment, the cutter has a further enhanced stiffness against a bending force acting on the cutter.

According to another embodiment of the scarfing machine of the present invention, the scarfing machine further includes a pressing unit positioned, in the vicinity of the cutter, upstream in the direction of machining the scarf surface with respect to the cutter, the pressing unit being configured to press the board material.

According to the present embodiment, right before the machining of the scarf surface at an edge of the board material, deformations such as warp and waviness of the board material can be decreased. As a result, a further improved scarf surface can be obtained.

According to another embodiment of the scarfing machine of the present invention, the pressing unit is configured to line contact with the board material. The pressing unit is arranged to contact the board material in a direction intersecting the direction of machning.

According to the present embodiment, in machining a scarf surface, when the supporting unit and the holding unit are caused to move relatively, the resistance between the pressing unit and the board material can be reduced, and also deformations such as warp and waviness of the board material can be well decreased right before the machining of the scarf surface. As a result, a further improved scarf surface can be obtained.

A method of machining a scarf surface at an edge of a wooden board material according to the present invention is configured, wherein the edge extends in a direction intersecting a fiber direction of the board material. In the method of machining a scarf surface, (a) the board material is held with at least the edge of the board material protruding; (b) a disc cutter having a plurality of blades is placed such that, on a virtual projection plane when viewed from one side of the extending direction of the edge of the board material, a projection of the edge of the board material intersects a projection of the cutter; (c) a second tilt angle of the cutter with respect to the board material is calculated based on the positional relationship between a rotation axis of the cutter and the scarf surface, a camber of the scarf surface having an arc concavity, a scarf ratio of the scarf surface, a diameter of the cutter, and a thickness of the board material, (d) the cutter is tilted relative to the board material at a first tilt angle such that the scarf surface has a desired scarf ratio, and the cutter is tilted relative to the board material at the second tilt angle such that the cutter is angled downward in the direction of machining the scarf surface, and (e) the board material and the cutter are relatively moved in the extending direction of the edge of the board material to machine the scarf surface along the edge of the board material. Here, the scarf ratio in the present invention is defined as a ratio between the length of a scarf surface and the thickness of a board material: the length being along the fiber direction of a projection of the scarf surface on a virtual projection plane when viewed from one side in the thickness direction of the board material. The "direction of machining" in the present invention means a direction intersecting the fiber direction of the board material, that is, the extending direction of the edge of the board material, and it corresponds to the direction in which the machining of the scarf surface progresses.

According to the present invention, since the cutter is angled downward at the second tilt angle in the direction of machining the scarf surface, the cutting blades that have machined the scarf surface can be well prevented from coming into contact again with the machined scarf surface. In addition, when machining the scarf surface, the cutter also acts with a cutting force in a direction to press the board material into the board thickness direction, which can well decrease deformations of the board material such as warp and waviness. The second tilt angle has a value which has been calculated based on the relative positional relationship between a rotation axis of the cutter and the scarf surface, a camber of the scarf surface with an arc concavity, a scarf ratio, a diameter of the cutter, and a thickness of the board material. Accordingly, a scarf surface can be machined to have a desired arc concavity. As a result, no increase in the curvature of the scarf surface having an arc concavity occurs, and the arc concavity can be appropriate. In other words, when the scarf surface is joined to another scarf surface in a post-process, the risk can be well reduced that these scarf surfaces only partially contact each other, and also the arc concavity reliably has a curvature appropriate to retain an adhesive in the scarf surfaces (pocket effect). As a result, the scarf surfaces can be well joined to each other.

According to the present invention, the step (b) includes a step of placing the cutter such that the rotation axis of the cutter passes approximately through the center of the arc length of the scarf surface. The step (c) is a step for calculating the second tilt angle that satisfies the following Equation,

[Equation 3]

$$h = \frac{R}{2} \bullet \sin \theta_2 - \sqrt{\sin^2 \theta_2 \bullet \frac{R^2 - t^2(1 + i^2)}{4}} \quad (7)$$

where $\theta_2$ is the second tilt angle, h is a desired camber of the scarf surface, i is a desired scarf ratio of the scarf surface, R is a desired diameter of the cutter, and t is a desired thickness of the board material. Here, the "center of the arc length" in the present invention literally corresponds to the center of the arc length of the scarf surface, but preferably encompasses almost the center of the arc length of the scarf surface.

According to the present invention, the second tilt angle can be easily calculated for obtaining a scarf surface with an appropriate arc concavity: the second tilt angle can lead to reduction in the risk that the scarf surface only partially contacts with another scarf surface, and also to an arc concavity appropriate to retain an adhesive in the scarf surface.

Since the machining unit is arranged such that the rotation axis of the cutter passes through the center of the arc length of the scarf surface, a component of the cutting force of the cutter, which presses the board material in the board thickness direction, can be applied to approximately the center of the arc length of the scarf surface. In addition, approximately at the center in the longitudinal direction of a slope of the scarf surface, the direction in which the cutting force of the cutter acts (the direction in which the blades pass) can be almost the same as the fiber direction of the board material. As a result, when a scarf surface is machined, the cutting force is less likely to act in the direction intersecting the fiber direction, which well decreases damages of the scarf surface in the direction intersecting the fiber direction.

Alternatively, according to the present invention, the step (b) includes a step of placing the cutter (20) such that the rotation axis of the cutter (20) passes through the tip of the scarf surface, and the step (c) is a step for calculating the second tilt angle that satisfies the following Equations (8) to (12),

[Equation 4]

$$h_1 \; = \; h_3 \bullet \cos \alpha \quad (8)$$

$$\alpha \; = \; \sin^{-1} \left( \frac{\frac{R}{2} \bullet \sin \theta_2 - y_4}{t^2 \, (i^2 + 1)} \right) \quad (9)$$

$$y_4 \; = \; \frac{-R\sin \theta_2 + \sqrt{R^2\sin^2\theta_2 - 4 \left(1 - \frac{1}{\sin^2\theta_2}\right) \left(\frac{R^2}{4} \sin^2\theta_2 + \frac{R^2}{4} - t^2 \, (i^2 + 1)\right)}}{2 \left(1 - \frac{1}{\sin^2\theta_2}\right)} \quad (10)$$

$$h_3 \; = \; |y_5| - \left| -\frac{R}{2} \bullet \sin \theta_2 \right| \quad (11)$$

$$y_5 \; = \; -\frac{R}{2} \bullet \sqrt{\tan^2\alpha + \sin^2\theta_2} \quad (12)$$

where $\theta_2$ is the second tilt angle, $h_1$ is the camber desired, i is the scarf ratio desired, R is the diameter desired, and t is the thickness desired.

According to the present invention, it is possible to achieve prevention of double cutting of a scarf surface as well as securing of the scarf surface having an appropriate circular arc surface.

BRIEF DESCRIPTION OF THE DRAWINGS

FIG. 1 is a perspective configuration diagram showing a schematic configuration of a scarfing machine 1 according to an embodiment of the present invention.

FIG. 2 is an enlarged perspective view of a main portion showing a schematic configuration of a pair of holding units 6, 6.

FIG. 3 is a diagram of FIG. 2 viewed in the direction of the arrow W1.

FIG. 4 is a perspective diagram showing a schematic configuration of a driving unit 8.

FIG. 5 is an enlarged perspective diagram of a main portion of the drive section 8.

FIG. 6 is an explanatory diagram showing a connection relationship between the pair of holding units 6, 6 and the driving unit 8.

FIG. 7 is a schematic configuration diagram showing a schematic configuration of a pair of machining units 10, 10.

FIG. 8 is a diagram of FIG. 7 viewed in the direction of the arrow W2.

FIG. 9 is a diagram of FIG. 7 viewed in the direction of the arrow W3.

FIG. 10 is an external view showing an external appearance of a circular saw 20.

FIG. 11A is an explanatory diagram of joining between scarf surfaces 92a, 92b machined by the scarfing machine 1 according to the present embodiment.

FIG. 11B is an explanatory diagram of joining between scarf surfaces 92a, 92b machined by a conventional scarfing machine.

FIG. 12 is an enlarged diagram of the scarf surfaces 92a, 92b.

FIG. 13 is an explanatory diagram showing a relative positional relationship between a projection of a circular saw 20, on a virtual projection plane when viewed from one side of a transfer direction TD of a veneer 90, and a projection of the veneer 90 on the virtual projection plane.

FIG. 14 is an enlarged diagram showing the Z1 part in FIG. 13.

FIG. 15 is an explanatory diagram showing that a projection of the circular saw 20 is an ellipse on a virtual projection plane when viewed from one side of the transfer direction TD of the veneer 90.

FIG. 16 is an explanatory diagram of machining of the scarf surfaces 92a, 92b on the edges 90a, 90b of the veneer 90 at a scarf angle $\theta_1$ and a heeling angle $\theta_2$ by the circular saw 20.

FIG. 17 is an explanatory diagram of the veneer 90 carried into the scarfing machine 1 by a carry-in roller 70a and held by a pair of clamping bars 60, 60.

FIG. 18 is an explanatory diagram of a cutting force Fc acting on the scarf surfaces 92a, 92b.

FIG. 19 is an explanatory view of the relative positional relationship between the circular saw 20 and the veneer 90 as seen from above in the vertical direction.

FIG. 20 is an explanatory diagram of the veneer 90 carried out of the scarfing machine 1 by the carry-out roller 72a.

FIG. 21 is an explanatory diagram of a modification in which the relative positional relationship between a circular saw 20 and a veneer 90 is set so that the rotation axis CLr of the circular saw 20 passes through the tips of the scarf surfaces 92a, 92b.

Fig. 22 is an explanatory diagram of, in a modification, the relative positional relationship between a projection of a circular saw 20, on a virtual projection plane when viewed from one side of a transfer direction TD of the veneer 90, and a projection of the veneer 90 on the virtual projection plane.

FIG. 23 is an enlarged diagram showing the Z2 section in FIG. 22.

FIG. 24 is an explanatory diagram for obtaining an angle $\alpha$.

FIG. 25 is an explanatory diagram for obtaining a camber $h_1$.

FIG. 26 is an enlarged perspective configuration diagram showing a schematic configuration of a drive section 8A of a modified example.

FIG. 27 is a diagram of FIG. 26 viewed in the direction of the arrow W4.

## DETAILED DESCRIPTION

Next, the best mode for carrying out the present invention will be described using examples.

[Example]

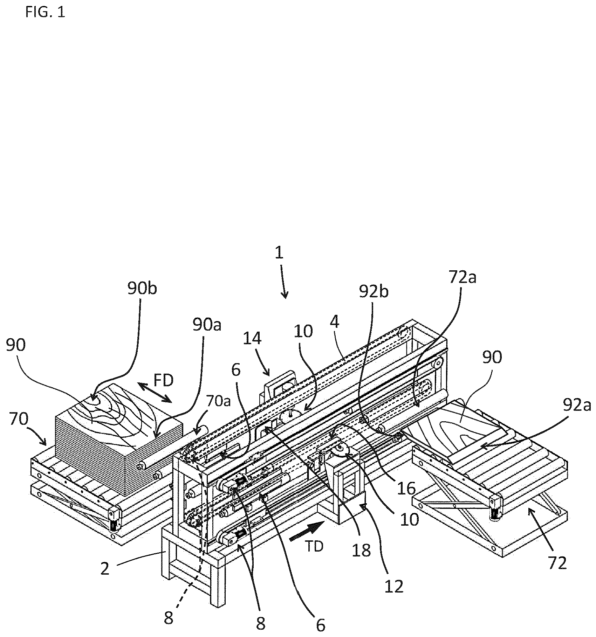

A scarfing machine 1 according to an embodiment of the present invention is configured as an apparatus for machining scarf surfaces 92a, 92b, respectively, on the edges 90a, 90b of a veneer 90 in the fiber direction FD. As shown in FIG. 1, the scarfing machine 1 includes a base 2, a frame 4 arranged on the base 2, a pair of holding units 6, 6 slidably arranged on the frame 4, driving units 8, 8, 8, 8 arranged on the frame 4 so that the pair of holding units 6, 6 can move relative to the frame 4, a pair of machining units 10, 10 arranged on both sides of the frame 4 in the longitudinal direction of the frame 4 (so as to sandwich the frame 4), supporting units 12, 14 arranged on the base 4 so as to support the machining unite 10, 10 in a predetermined posture, pressing units 16, 18 arranged in the vicinity of the supporting units 12, 14 of the frame 4, and a control device (not shown) for controlling the entire scarfing machine 1.

As shown in FIG. 1, the frame 4 has an elongated shape in the transfer direction TD in which the veneer 90 is carried. On one end side of the frame 4 in the longitudinal direction (upstream in a transfer direction TD of the conveyor 90), a carry-in conveyor 70 is arranged, and also a carry-in roller 70a is arranged to carry the veneer 90 from the carry-in conveyor 70 into the scarfing machine 1. On the other end side of the frame 4 in the longitudinal direction (downstream in the transfer direction TD of the conveyor 90), a carry-out conveyor 72 is arranged, and also a carry-out roller 72a is arranged to discharge the veneer 90 from the scarfing machine 1 to the carry-out conveyor 72. The carry-in roller 70a and the carry-out roller 72a are arranged so that the carry-in direction and the carry-out direction of the veneer 90 are substantially orthogonal to the longitudinal direction of the frame 4 (the transfer direction TD of the veneer 90). The carry-in conveyor 70, the carry-in roller 70a, the carry-out conveyor 72 and the carry-out roller 72a are driven and controlled by the control device.

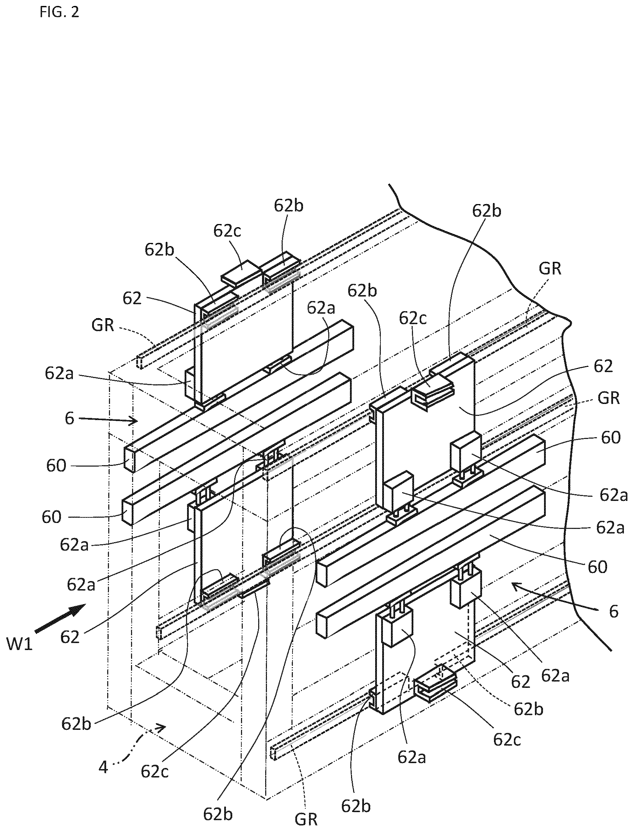

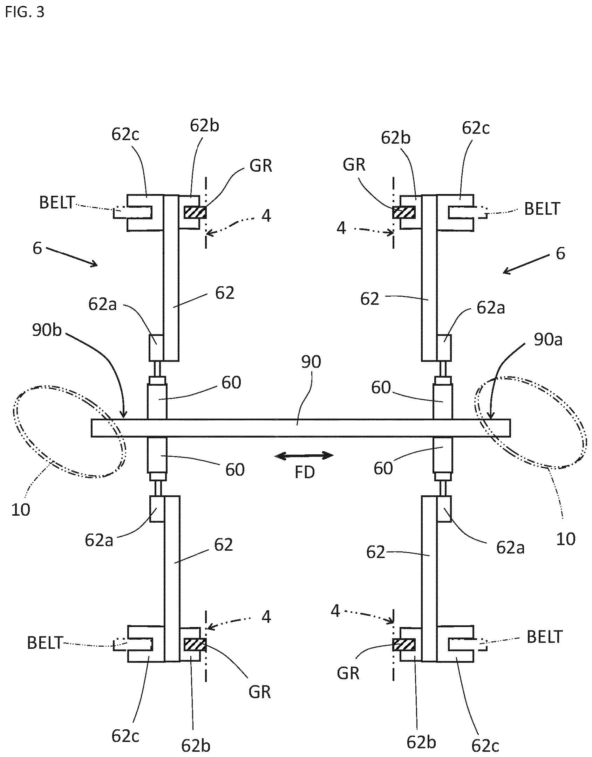

As shown in FIG. 2, the holding unit 6 includes a pair of upper and lower clamping bars 60, 60 parallel to each other, and a pair of main plates 62, 62 connected, respectively, to the pair of upper and lower clamping bars 60, 60 via a pair of air cylinders 62a, 62a. The holding unit 6 is configured to clamp the veneer 90 between the pair of upper and lower clamping bars 60, 60 by extending the rods (not shown) of the air cylinders 62a, 62a (see FIG. 3). The holding unit 6 is also configured to release the veneer 90 held between the pair of upper and lower holding bars 60, 60 by retracting the rods (not shown) of the air cylinders 62a, 62a. The air cylinders 62a, 62a are driven and controlled by the control device.

The clamping bars 60, 60 clamp the veneer 90 with both edges 90a, 90b of the veneer 90 protruding, as shown in FIG. 3. As shown in FIGS. 2 and 3, the main plate 62 includes a pair of guide portions 62b, 62b to be engaged with a guide rail GR, and a fixing portion 62c to be fixed to an endless belt BELT, which will be described later, of the driving unit 8. The body plate 62 is slidably supported by the frame 4 when engaged with the pair of guide portions 62b, 62b with the guide rail GR. The fixed portion 62c is fixed to the endless belt BELT by a fastening member such as a bolt (not shown). The guide rail GR is mounted to the frame 4 so as to extend in the longitudinal direction of the frame 4.

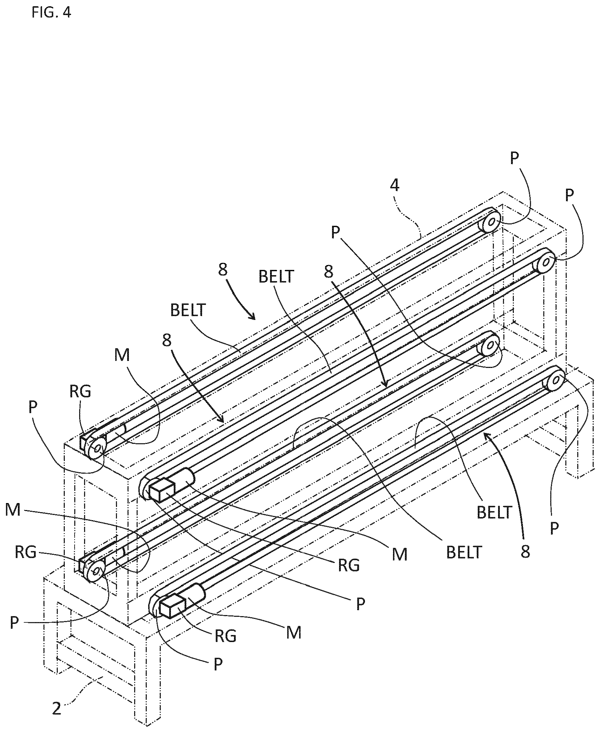

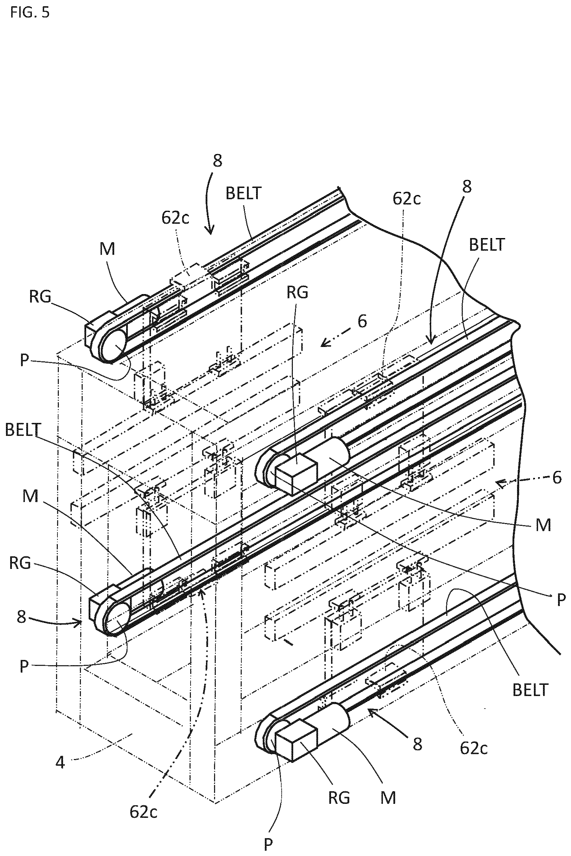

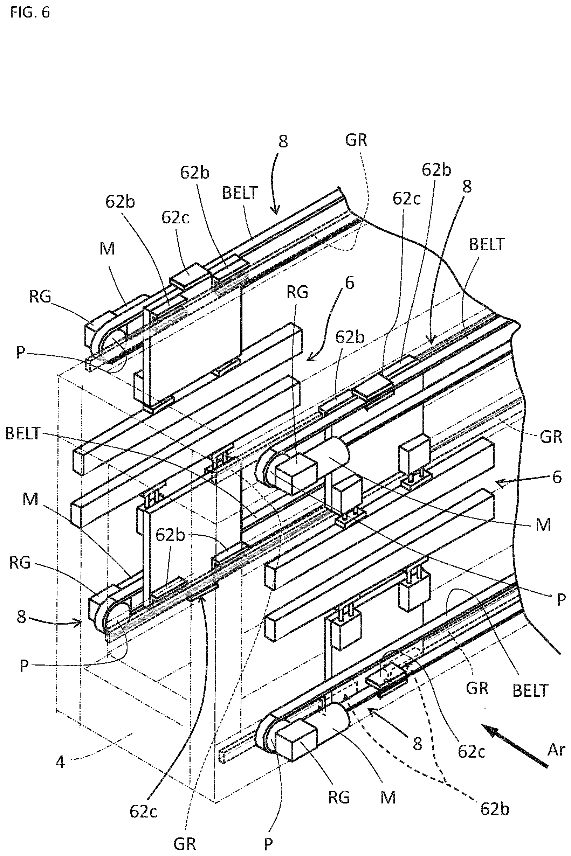

As shown in FIGS. 4 and 5, the driving unit 8 includes an endless belt BELT rotatably supported by the frame 4 via pulleys P and P, a gear mechanism RG (e.g., speed reducer) connected to a rotary shaft (not shown) of one of the pulleys, and a motor M connected to a rotary shaft (not shown) of the gear mechanism RG. The motors M, M, M, M drive one of the pulleys P, P, P, P to rotate clockwise when viewed in the direction of the arrow Ar in FIG. 6, so as to rotate the endless belt BELT clockwise. Accordingly, the pair of holding units 6, 6 fixed to the endless belts BELT, BELT, BELT, BELT via the fixing portions 62c, 62c, 62c, 62c are moved downstream in the transfer direction TD of the conveyor 90 (see FIG. 1). In contrast, the motors M, M, M, M drive the pulleys P, P, P, P to rotate counterclockwise when viewed in the direction of the arrow Ar in FIG. 6, so as to rotate the endless belt BELT counterclockwise. Accordingly, the pair of holding units 6, 6 fixed to the endless belts BELT, BELT, BELT, BELT via the fixing portions 62c, 62c, 62c, 62c are moved upstream in the transfer direction TD of the conveyor 90 (see FIG. 1). The motors M, M, M, M are synchronously controlled by the control device. The movement of the pair of holding units 6, 6 upstream and downstream in the transfer direction TD is guided by the guide portions 62b, 62b, 62b, 62b that are engaged with the guide rails GR, GR, GR, GR. The configuration allows the pair of holding units 6, 6 to smoothly move upstream and downstream in the transfer direction TD.

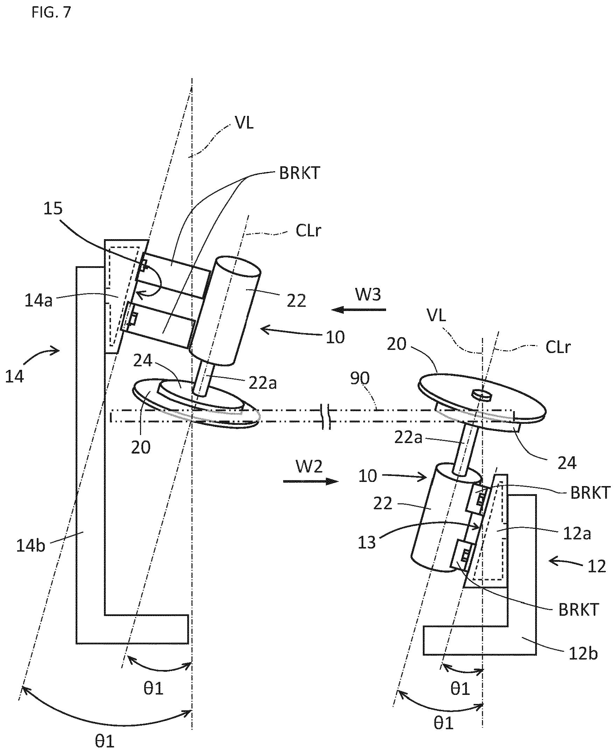

As shown in FIGS. 7 to 9, the machining unit 10 includes a circular saw 20, and a motor 22 having a rotary shaft 22a to be connected to the circular saw 20. As shown in FIG. 3, the machining unit 10 is arranged in a positional relationship where a projection of the circular saw 20 intersects projections of both edges 90a, 90b of the veneer 90 (the projections of both edges 90a, 90b are included inside the projection of the circular saw 20), when viewed from one side in the longitudinal direction of the frame 4 (one side of the transfer direction TD of the veneer 90), that is, on a virtual projection plane when viewed from one side of the extending direction of the edges 90a, 90b of the veneer 90 (the direction perpendicular to the plane of FIG. 3). Note that, as shown in FIG. 3, both edges 90a, 90b of the veneer 90 are free ends.

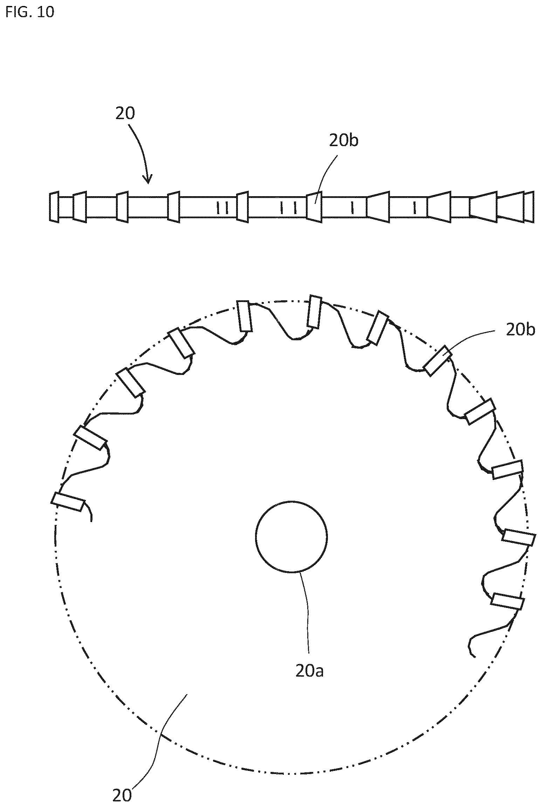

As shown in FIG. 10, the circular saw 20 has a through-hole 20a centrally to accommodate the rotary shaft 22a of the motor 22, and a plurality of blades 20b on the outer circumference. The blades 20b are all configured as flat blades. The circular saw 20 also has a reinforcing disc 24, as shown in FIGS. 7 to 9, on the rear side 21b, that is, the side on which motor 22 is mounted. The motor 22 is driven and controlled by the control device. The circular saw 20 corresponds to the "cutter" in the present invention, and the blades 20b are an example of implemented configuration for the "blade" in the present invention. Further, the rear surface 21b corresponds to the "first surface" in the present invention, and the reinforcing disc 24 is an example of implemented configuration for the "first reinforcing disc" in the present invention.

As shown in FIGS. 7 to 9, the supporting units 12, 14 include tilting tables 12a, 14a and supporting tables 12b, 14b for mounting the tilting tables 12a, 14a to the base 2. The tilting tables 12a, 14a have slopes 13, 15 tilted by an angle $\theta_1$ with respect to the vertical line VL. Here, the supporting units 12, 14 are mounted to the base 2 in a direction in which the slopes 13 and 15 surface each other. At this time, the slopes 13, 15 are parallel to each other, as shown in FIG. 7.

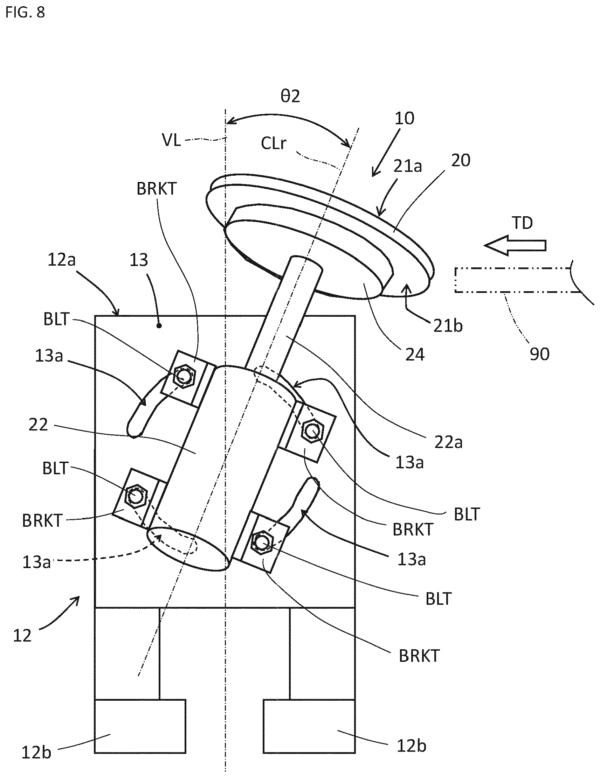

As shown in FIG. 8, the slopes 13, 15 has arc-shaped long holes 13a, 13a, 13a, 13a, 15a, 15a, 15a, 15a where bolts BLT can be inserted. The machining unit 10 is fixed to the slopes 13, 15 via a bracket BRKT by the bolts BLT.

As such, as shown in FIG. 7, the machining unit 10 is supported by the supporting unit 12, 1 14 in a state where, on a virtual projection plane when viewed from one side of the transfer direction TD of the veneer 90 (the longitudinal direction of the frame 4, the direction perpendicular to the plane of FIG. 7), a projection of the rotation axis CLr of the circular saw 20 is tilted relative to a projection of the vertical line VL on the virtual projection plane by an angle $\theta_1$ downstream in the transfer direction TD. The configuration leads to machining of the scarf surfaces 92a, 92b (see FIG. 1) at both edges 90a, 90b of the veneer 90 at a tilt angle $\theta_1$ (hereinafter, this may be referred to as "scarf angle $\theta_1$"). Note that, in the present embodiment, the tilting tables 12a, 14a are prepared with various scarf angles $\theta_1$, for example, a plurality of tilting tables 12a, 14a having slopes 13 and 15 with different scarf angles $\theta_1$ at intervals of 1 degree is prepared, and thereby suitable tilting tables 12a, 14a can be chosen to obtain a desired scarf angle $\theta_1$. The scarf angle $\theta_1$ is an example of implemented configuration for the "first tilt angle" in the present invention.

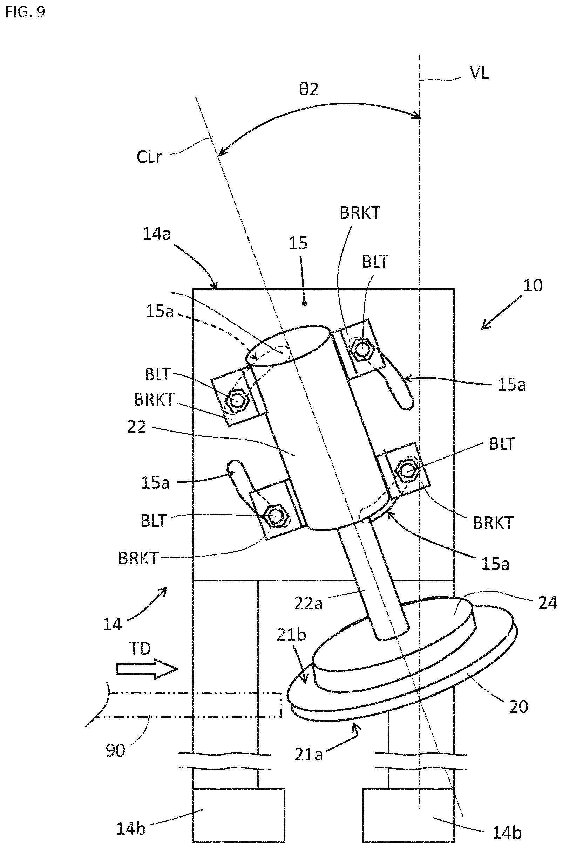

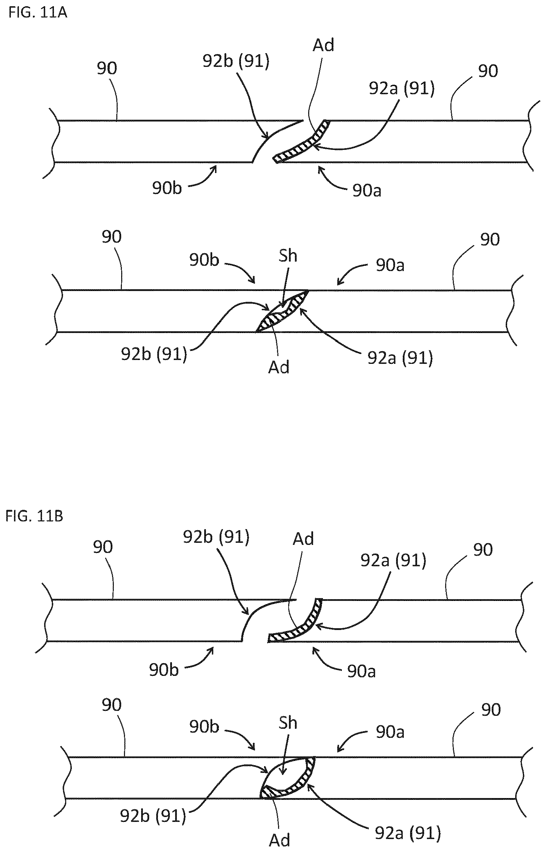

As shown in FIGS. 8 and 9, the machining unit 10 is supported by the support units 12, 14 in a state where, on a virtual projection plane when viewed from one side of the direction (the direction orthogonal to the planes of FIGS. 8 and 9) perpendicular to both the transfer direction TD of the veneer 90 (the longitudinal direction of the frame 4, the left-right direction of FIGS. 8 and 9) and the vertical direction (the up-down direction of FIGS. 8 and 9), a projection of the rotation axis CLr of the circular saw 20 is tilted relative to a projection of the vertical line VL on the virtual projection plane by an angle $\theta_2$ upstream in the transfer direction TD (the right side of FIG. 8 and the left side of FIG. 9). In other words, the circular saw 20 is supported by the supporting units 12, 14 so as to be angled downward relative to the veneer 90 by an angle $\theta_2$ (hereinafter, this may be referred to as "heeling angle $\theta_2$") upward in the transfer direction TD of the veneer 90. Note that the angle $\theta_2$ is adjustable in the range of the extending direction (circumferential direction) of the long holes 13a, 13a, 13a, 13a, 15a, 15a, 15a, 15a. The configuration leads to the scarf surfaces 92a, 92b to be machined at the both edges 90a, 90b of the veneer 90 to have an arc concavity 91, as shown in FIGS. 11, 12 and 14. The heeling angle $\theta_2$ is an example of implemented configuration for the "second tilt angle" in the present invention.

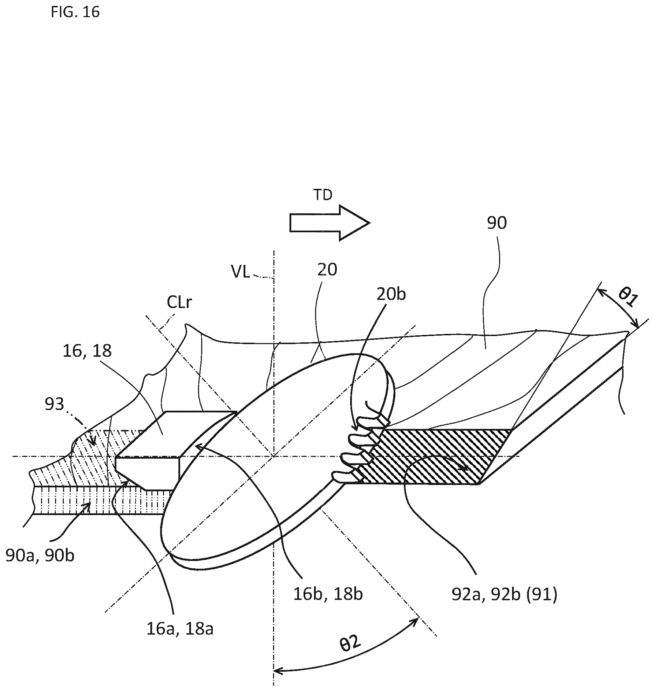

As such, since the rotational axis CLr of the circular saw 20 is set at the heeling angle $\theta_2$, double cutting of the veneer 90 by the circular saw 20 (re-contacting of the blades 20b that machined the scarf surfaces 92a, 92b with the scarf surfaces 92a, 92b) can be well prevented (see FIG. 16). Note that the circular saw 20 is subjected to a bending force due to the contact with the veneer 90 at the heeling angle $\theta_2$, but the reinforcing disc 24 helps the circular saw 20 not to lose the stiffness.

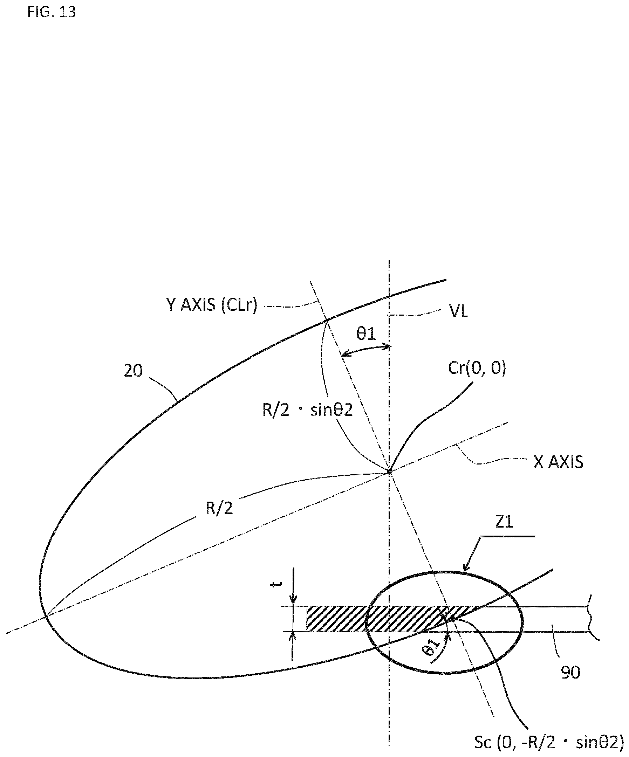

In addition, the circular saw 20 is supported by the supporting units 12, 14 (see FIGS. 7 to 9) so that the rotation axis CLr passes through the center of the arc length of the arc concavity 91, as shown in FIGS. 13, 14, 15, 16, and 19. In order to pass the rotation axis CLr of the circular saw 20 through the center of the arc length of the arc concavity 91, for example, the positions of the tilting tables 12a, 14a relative to the supporting tables 12b, 14b in the vertical direction may be changed.

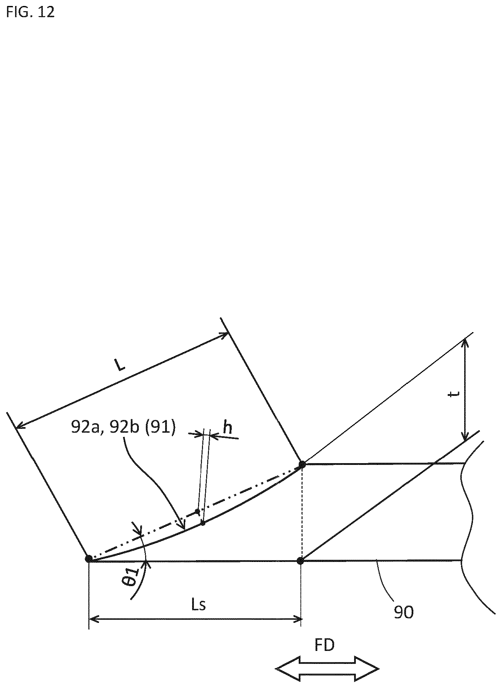

When the circular saw 20 mounted as described above machines the scarf surfaces 92a, 92b at the edges 90a, 90b of the veneer 90, the scarf surfaces 92a, 92b have arc concavities 91, 91, as shown in FIGS. 11, 12 and 14. Here, if the arc concavity 91 is appropriate, specifically if the camber h of the arc concavity 91 (see FIG. 12) is appropriate, a space is secured between the arc concavities 91, 91, where the adhesive Ad is well retained (pocket effect). Thus, as shown in FIG 11A, when the veneers 90 are joined at the scarf surfaces 92a, 92b in a post-process, the adhesive Ad is unlikely to seep out onto the surfaces of the veneers 90. In addition, the scarf surfaces 92a, 92b are well joined each other, resulting in stable surface machining in post-processes. Furthermore, when the veneers 90 are joined to each other using a hot plate press, a hole Sh for appropriate steam release can be provided, which accelerates curing of the adhesive Ad.

In contrast, if the arc concavity 91 is inappropriate, specifically if the camber h of the arc concavity 91 (see FIG. 12) is inappropriate (e.g., an excessively large camber h), when the veneers 90 are joined at the scarf surfaces 92a, 92b in a post-process, as shown in FIG 11B, the scarf surfaces 92a, 92b may be joined only partially, resulting in a poor joining of the veneers 90.

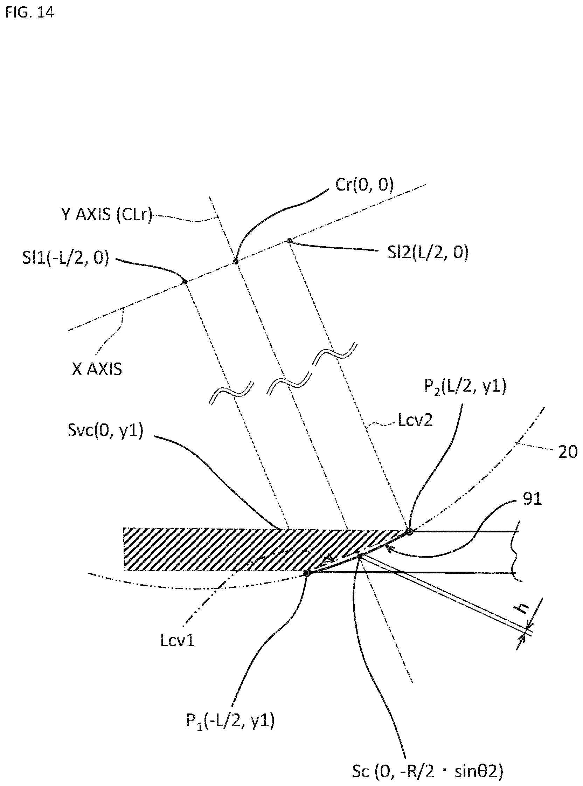

In the present embodiment, as shown in FIGS. 13 and 14, the camber h of the arc concavity 91 is calculated based on the relative positional relationship between a projection of a circular saw 20, on a virtual projection plane when viewed from one side of the transfer direction TD of the veneer 90, and a projection of the veneer 90 on the virtual projection plane. Specifically, the camber h of the arc concavity 91 is calculated by the following Equation (8). The way to derive Equation (8) is described below.

[Equation 4]

$$h = \frac{R}{2} \bullet \sin \theta_2 - \sqrt{\sin^2 \theta_2 \bullet \frac{R^2 - t^2(1 + i^2)}{4}} \quad (8)$$

where R is the diameter of the circular saw 20, t is the thickness of the veneer 90, and i is the scarf ratio.

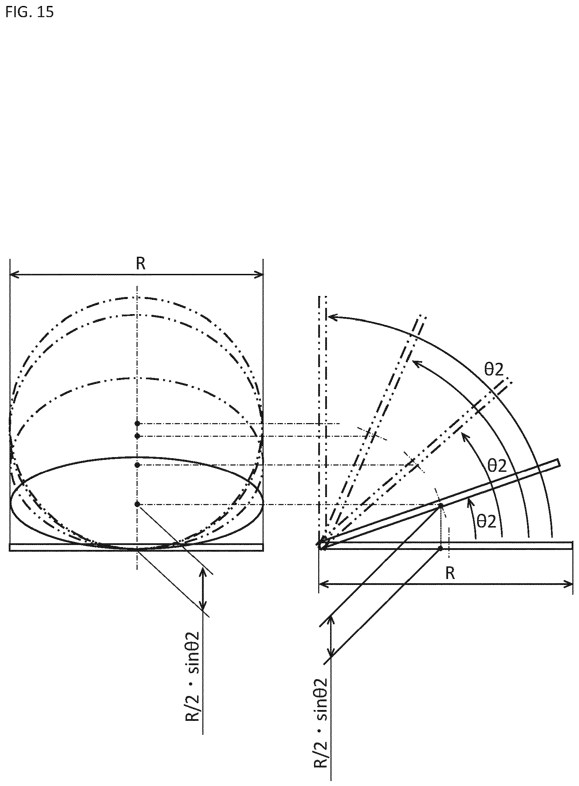

As shown in FIGS. 13 and 15, the circular saw 20 is projected as an ellipse with a major axis R and a minor axis R $\bullet$ $\sin \theta_2$, on a virtual projection plane when viewed from one side of the transfer direction TD of the veneer 90 (the direction of the plane of FIG. 13). Note that the rotation axis CLr of the circular saw 20 on the virtual projection plane overlaps with the Y axis (the major axis of the ellipse).

Here, as shown in FIG. 14, in an XY coordinate system with the origin (0, 0) at the center Cr of the ellipse, the straight line including the minor axis of the ellipse as Y axis, and the straight line including the major axis of the ellipse as X axis, the camber h of the arc concavity 91 is obtained by subtracting the absolute value $|y_1|$ of the Y coordinate at the intersection point Svc between the line segment Lcv1 and the Y axis from the absolute value $|-R/2 \bullet \sin \theta_2|$ of the Y coordinate at the intersection point Sc between the ellipse and the Y axis, wherein the line segment Lcv1 connects between both ends (the points $P_1$ and $P_2$) of a projection of the arc concavity 91 in the XY coordinate system.

As shown in FIG. 14, the Y coordinate at the intersection point Sc is equal to 1/2 of the minor axis of the ellipse, that is, $-R/2 \bullet \sin \theta_2$. The Y coordinate y1 at the intersection point Svc can be obtained by the following Equations (9) to (12), which results in the following Equation (13), where Equation (9) represents the ellipse. Equation (10) represents a line segment Lcv2 parallel to the Y axis and passing through one end $P_2$ of the projection of the arc concavity 91 on the virtual projection plane, and can be obtained by the following Equations (11) and (12).

[Equation 5]

$$x^2 + \frac{1}{\sin^2\theta_2} \bullet y^2 = \frac{R^2}{4} \quad (9)$$

$$x = \frac{\sqrt{t^2\,(i^2 + 1)}}{2} \quad (10)$$

$$x = \frac{L}{2} \quad (11)$$

$$L = \sqrt{t^2\,(i^2 + 1)} \quad (12)$$

$$y_1 = -\sqrt{\left( \sin^2\theta_2 \bullet \frac{R^2 - t^2(1 + i^2)}{4} \right)} \quad (13)$$

where L is the scarf length of the scarf surfaces 92a, 92b as shown in FIG. 12, more specifically the length of the line segment Lcv1 (see FIG. 14). In addition, i is the scarf ratio of the scarf surfaces 92a, 92b. That is, the ratio (I = Ls/t) of a projected length Ls and the thickness t, the projected length Ls being along the fiber direction FD in the projection of the scarf surfaces 92a, 92b on a virtual projection plane when viewed from one side of the thickness t of the veneer 90. The projected length Ls is the square root of (Ls = √(L2 - t2)) which is obtained by subtracting the square of the thickness t from the square of the scarf length L.

By subtracting the absolute value $|y_1|$ of the Y coordinate at the intersection point Svc from the absolute value $|\text{-R/2} \bullet \sin\theta_2|$ of the Y coordinate at the intersection point Sc, Equation (8) is derived. Here, the diameter R of the circular saw 20 is a value determined by equipment requirements, and the thickness t, the scarf ratio i, and the scarf length L of the veneer 90 are values determined by product requirements. Accordingly, it is obvious that the heeling angle $\theta_2$ should be adjusted in order to set the camber h of the arc concavity 91 to a desired value. As described above, the present embodiment is configured in which the heeling angle $\theta_2$ is adjusted to obtain a desired camber h.

As shown in FIG. 16, the pressing units 16, 18 are arranged, with respect to the circular saw 20, upstream (the left side in FIG. 16) in the transfer direction TD of the veneer 90 and in the vicinity of the outer circumference of the circular saw 20. The pressing units 16, 18 have a size capable of pressing at least portions of the edges 90a, 90b of the veneer 90, the portions resulting in chips 93 when cut out (excluded) along with machining of the scarf surfaces 92a, 92b. In addition, the pressing units 16, 18 have slopes 16a, 18a on parts of the bottom surfaces, and curved surfaces 16b, 16b of substantially the same curvature as that of the circular saw 20, the curved surfaces 16b, 16b facing the outer periphery of the circular saw 20. The slopes 16a, 18a are tilted upward in a direction away from the curved surfaces 16b, 18b. In other words, the slopes 16a, 18a have an upwardly inclining surface toward the upstream of the transfer direction TD of the veneer 90 (the left side in FIG. 16).

In the present embodiment, as shown in FIG. 16, the pressing units 16, 18 press, just before machining, the part of the veneer 90 to be machined as the scarf surfaces 92a, 92b by the circular saw 20. Thus, deformations such as warp and waviness of the veneer 90 just before machining be well decreased. As a result, the scarf surfaces 92a, 92b can be satisfactorily machined. Since the pressing units 16, 18 have the slopes 16a and 18a, the conveyed veneer 90 can be smoothly received below the pressing units 16, 18. In addition, since the pressing units 16, 18 have curved surfaces 16b and 18b, the veneer 90 can be pressed until just before reaching the circular saw 20, which well decreases deformations such as warp and waviness of the veneer 90 just before machining

Next, the operation of the scarfing machine 1 of the above configuration, in particular, the operation of machining the scarf surfaces 92a, 92b on both edges 90a, 90b of the veneer 90 will be described. When the scarfing machine 1 is started to operate, as shown in FIG. 1, the pair of holding units 6, 6 is arranged upstream in the transfer direction TD of the veneer 90 (one end side in the longitudinal direction of the frame 4).

When the scarfing machine 1 is started, first, the control device drive-controls the carry-in conveyor 70 and the carry-in roller 70a, and one veneer 90 is picked up from a plurality of veneers 90 stacked on the carry-in conveyor 70, and carried into the scarfing machine 1 via the carry-in roller 70a. Here, the veneer 90 is arranged on the carry-in conveyor 70 so that the fiber direction FD is along the carry-in direction (substantially parallel to the carry-in direction), and thus the veneer 90 is carried into the scarfing machine 1 in a posture where the fiber direction FD is almost perpendicular to the longitudinal direction of the frame 4 (the transfer direction TD of the veneer 90).

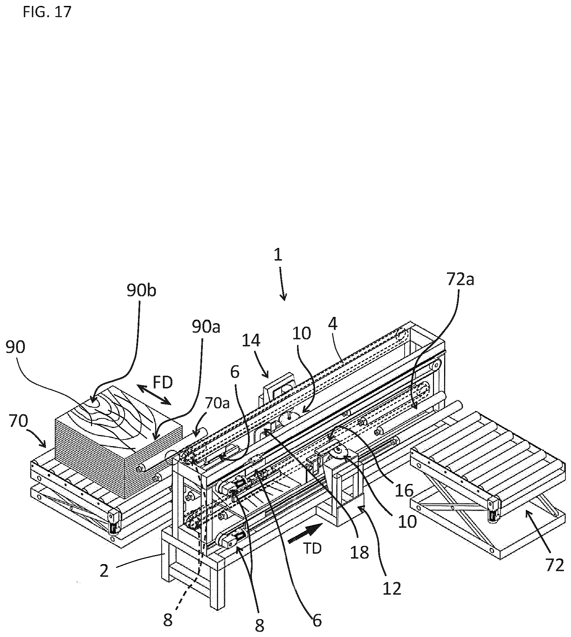

When the veneer 90 is carried into the scarfing machine 1 via the carry-in roller 70a, the control device drives each pair of air cylinders 62a, 62a (see FIG. 2) of the pair of holding units 6, 6. The veneer 90 is thereby clamped by each pair of clamping bars 60, 60 (see FIGS. 2 and 17). In this state, the control device drive-controls the motors M, M, M, M of the driving unit 8 (see FIGS. 5 and 6), so that the endless belts BELT, BELT, BELT, BELT (see FIGS. 5 and 6) rotate clockwise when viewed in the direction of the arrow Ar in FIG. 6. As a result, the pair of holding units 6, 6 move toward downstream in the transfer direction TD while holding the veneer 90 therebetween.

At this point of time, the motors 22, 22 (see FIG. 7) of the pair of machining units 10, 10 are driven by the control device, and the veneer 90 passes through the position where the pair of machining units 10, 10 are arranged. During the passing, the scarf surfaces 92a, 92b are machined on both edges 90a, 90b of the veneer 90 by a pair of circular saws 20, 20. Note that the scarf surfaces 92a, 92b are machined so as to be substantially parallel to each other.

In the present embodiment, the circular saws 20, 20 are supported by the supporting units 12, 14 at a heeling angle $\theta_2$. That is, the circular saw 20 is angled downward by an angle $\theta_2$ toward the upstream of the transfer direction TD with respect to the veneer 90. Thereby, double cutting of the veneer 90 by the circular saw 20 (re-contacting of the blades 20b that machined the scarf surfaces 92a, 92b with the scarf surfaces 92a, 92b) can be well prevented (see FIG. 16).

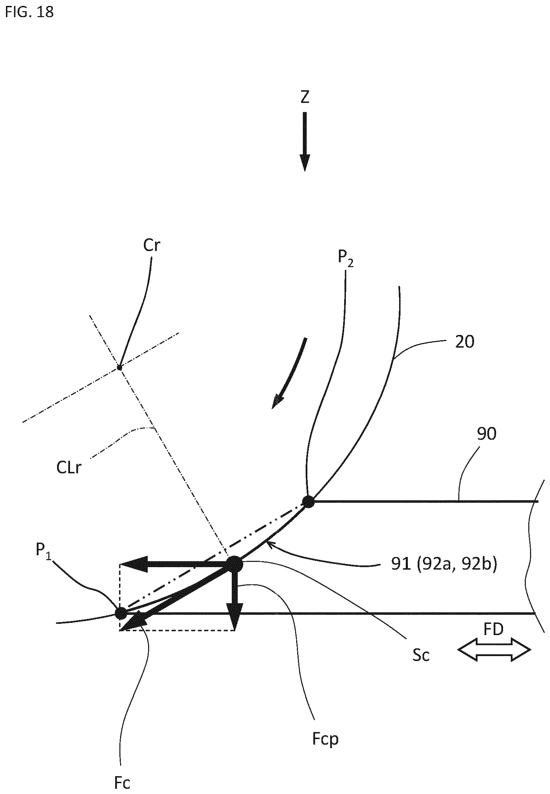

In addition, since a force component Fcp of the cutting force Fc of the circular saw 20 acts in the direction to press the veneer 90 into the thickness direction, as shown in FIG. 18. Hence, deformation of the veneer 90 such as warp and waviness can be decreased satisfactorily. The rotation axis CLr of the circular saw 20 passes through approximately the center (the point Sc) of the arc length of the scarf surfaces 92a, 92b (the length of the arc connecting the points $P_1$ and $P_2$) (see FIG. 14). Hence, the force component Fcp acts on approximately the center (the point Sc) of the arc length of the scarf surfaces 92a, 92b (the length of the arc connecting the points $P_1$ and $P_2$). Further, all of the plurality of blades 20b of the circular saw 20 are flat, and thereby the force components Fcp of the cutting forces Fc from all the blades 20b are caused to act in the direction to press the veneer 90 into the thickness direction. Thus, deformations such as warp and waviness of the veneer 90 can be further decreased. As a result, the scarf surfaces 92a, 92b can be satisfactorily machined.

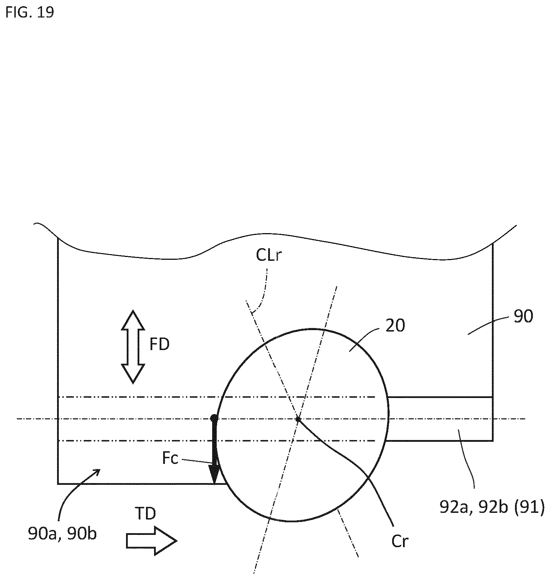

As shown in FIG. 19, the direction in which the cutting force Fc acts (the direction the blades 20b pass) and the fiber direction FD of the veneer 90 can be identical to each other approximately at the center (the point Sc) in the lengthwise direction of the slopes of the scarf surfaces 92a, 92b (the direction along the length of the arc connecting the points $P_1$ and $P_2$). Thus, in machining of the scarf surfaces 92a, 92b, the cutting force Fc is unlikely to act in the direction intersecting the fiber direction FD. As a result, damages to the scarf surfaces 92a, 92b in the direction intersecting the fiber direction FD can be sufficiently decreased.

In the present embodiment, the circular saws 20, 20 are arranged at the heeling angle $\theta_2$, and the resulting scarf surfaces 92a, 92b have arc concavities 91, 91. The shape of said arc concavities 91, 91, specifically the magnitude of cambers h, h of said arc concavities 91, 91 greatly affects the quality of joining between the scarf surfaces 92a, 92b of the veneers 90. In the present embodiment, Equation (8) is used to adjust the heeling angle $\theta_2$ so as to obtain the desired camber h, h. Accordingly, while avoiding partial joining between the scarf surfaces 92a, 92b, a space for well retaining the adhesive Ad can be secured between the arc concavities 91, 91 (pocket effect). As a result, when the veneers 90 are joined together at the scarf surfaces 92a, 92b, the adhesive Ad can be well hindered from seeping out onto the surfaces of the veneers 90 (FIG. 11A), and the scarf surfaces 92a, 92b can be properly joined together. Note that, when the veneers 90 are joined each other using a hot plate press, a hole Sh for appropriate steam release can be provided, which accelerates curing of the adhesive Ad.

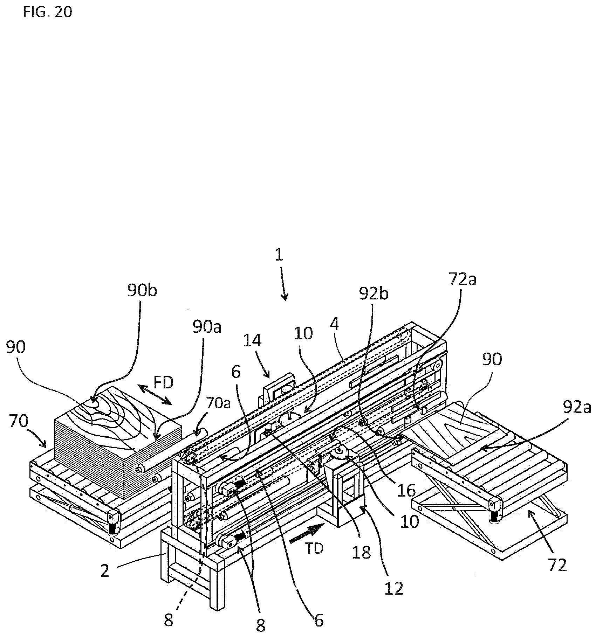

As described above, the veneer 90 with the scarf surfaces 92a, 92b machined by the pair of machining units 10, 10 is transported to reach the carry-out conveyor 72 arranged on the other longitudinal end side of the frame 4 (downstream of the transfer direction TD). The veneer 90 is then carried out from the scarfing machine 1 by the carry-out roller 72a and the carry-out conveyor 72, which are driven and controlled by the control device, to be carried to a post-process (see FIG. 20).

According to the scarfing machine 1 of the embodiment of the present invention described above, a heeling angle $\theta_2$ is adjusted to obtain a desired camber h, h, so as to machine the scarf surfaces 92a, 92b on the veneer 90 at the heeling angle $\theta_2$. Thus, double cutting of the veneer 90 by the circular saw 20 (re-contacting of the blades 20b that machined the scarf surfaces 92a, 92b with the scarf surfaces 92a, 92b) can be well prevented. Since the cambers h, h of the arc concavities 91, 91 can be set to a desired value, the scarf surfaces 92a, 92b are unlikely to bond only partially to each other, as well as a space for well retaining the adhesive Ad can be secured between the arc concavities 91, 91 (pocket effect). As a result, when the veneers 90 are joined together at the scarf surfaces 92a, 92b, the adhesive Ad can be hindered from seeping out onto the surfaces of the veneers 90, and the scarf surfaces 92a, 92b can be joined appropriately. Furthermore, when the veneers 90 are joined each other using a hot plate press, a hole Sh for appropriate steam release can be provided, which accelerates curing of the adhesive Ad.

According to the scarfing machine 1 of the embodiment of the present invention, the force component Fcp of the cutting force Fc of the circular saw 20 can be caused to act, in the direction to press the veneer 90 into the thickness direction, approximately at the center (the point Sc) of the arc length (the length of the arc $P_1$ and $P_2$) of the scarf surfaces 92a, 92b. As such, deformations such as warp and waviness of the veneer 90 can be well decreased.

All of the plurality of blades 20b of the circular saw 20 are flat, and thereby the force components Fcp of the cutting forces Fc from all the blades 20b can be caused to act in the direction to press the veneer 90 into the thickness direction. In addition, the direction in which the cutting force Fc acts (the direction the blades 20b pass) and the fiber direction FD of the veneer 90 can be identical to each other approximately at the center (the point Sc) in the lengthwise direction of the slopes of the scarf surfaces 92a, 92b (the direction along the points $P_1$ and $P_2$). As a result, damages to the scarf surfaces 92a, 92b in the direction intersecting the fiber direction FD can be well decreased.

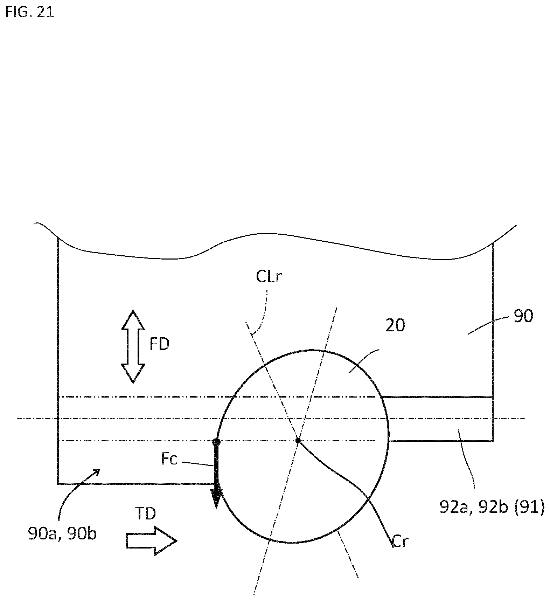

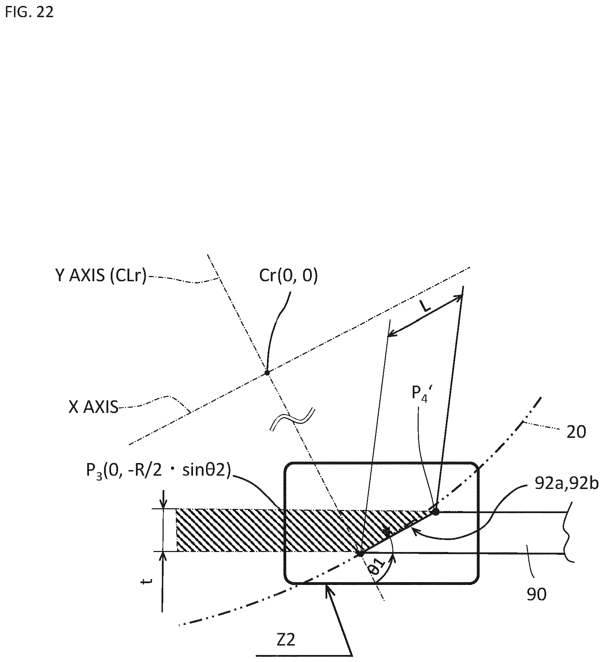

In the present embodiment, the rotation axis CLr of the circular saw 20 passes through approximately the center (the point Sc) of the arc length of the scarf surfaces 92a, 92b (the length of the arc connecting the points $P_1$ and $P_2$), but the present invention is not limited to this configuration. For example, as shown in FIGS. 21 and 22, the rotation axis CLr of the circular saw 20 may pass through the tips of the scarf surfaces 92a, 92b (the tips being one ends of the scarf surfaces 92a, 92b in the direction along the fiber direction FD on a virtual projection plane when the veneer 90 is viewed in the thickness direction (the point $P_3$ in FIG. 22)).

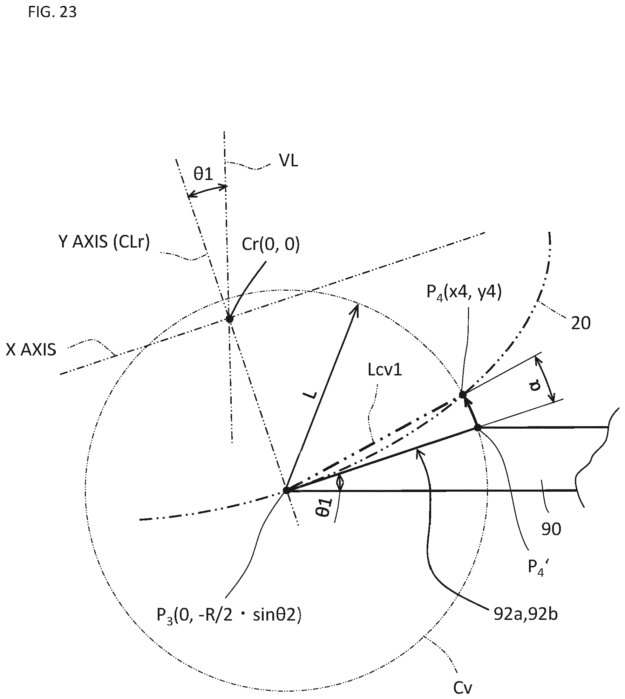

In this case, as in the above-described embodiment, a camber $h_1$ can be determined using an XY coordinate system with the origin (0, 0) at the center Cr of an ellipse, the straight line including the minor axis of the ellipse as Y axis, and the straight line including the major axis of the ellipse as X axis. In a case where the rotation axis CLr of the circular saw 20 passes through the tips of the scarf surfaces 92a, 92b (the point $P_1$ in FIG. 22), in order to obtain a desired scarf length L (the length of the line segment Lcv1), as shown in FIG. 23, the rotation axis CLr of the circular saw 20 is required to be tilted by an angle smaller than the scarf angle $\theta_1$ by an angle $\alpha$. In other words, in order to obtain the desired scarf length L (the length of the line segment Lcv1), the circular saw 20 is set such that, on a virtual projection plane when viewed from one side in the transfer direction TD of the veneer 90 (the direction orthogonal to the plane of FIG. 23), a projection of the rotational axis center line CLr of the circular saw 20 is tilted by an angle $(\theta_1 - \alpha)$ to the left (the left side in FIG. 23) toward downstream of the transfer direction TD (the rear side of the paper of FIG. 23) with respect to the vertical line VL on the virtual projection plane.

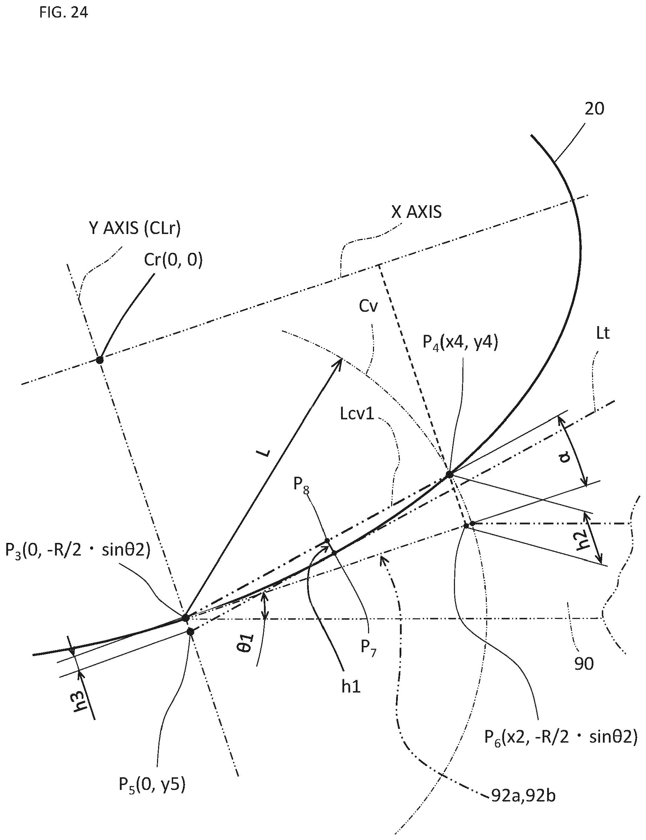

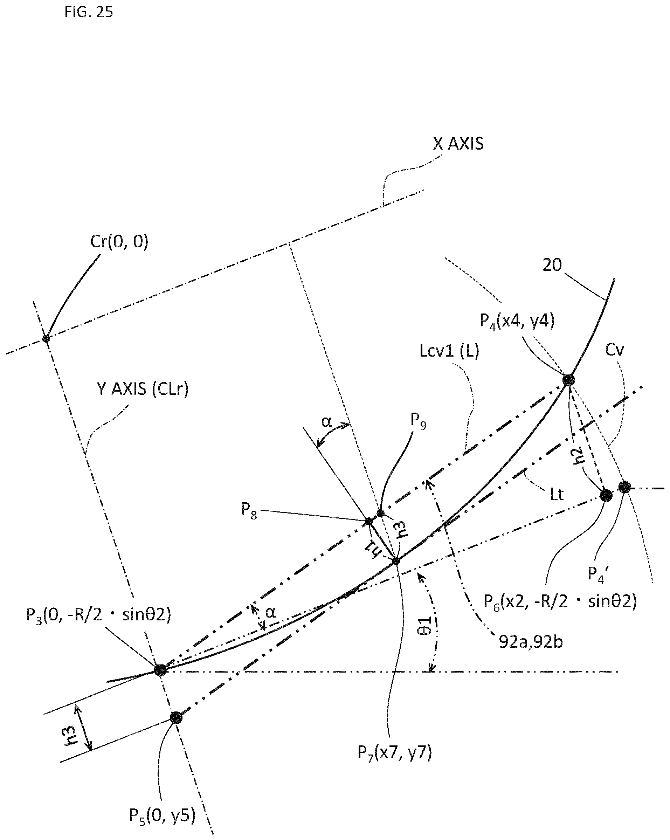

The camber $h_1$ can be determined by the following Equations (14) to (23). Specifically, the camber $h_1$ of the arc concavity 91 is calculated by the angle $\alpha$ and a distance $h_3$. Here, the angle $\alpha$ is determined by the following Equations (15) to (18) and the above-described Equation (12). The distance $h_3$ is determined by the following Equations (19) to (23), the distance $h_3$ being parallel to the line segment Lcv1 (the straight line connecting the both ends (the points $P_3$ and $P_4$) of a projection of the arc concavity 91 in the XY coordinate system) and connecting between a Y intercept $P_5$ of the straight line Lt that is tangent to the ellipse (the circular saw 20) and the intersection point $P_3$ of the ellipse and the Y axis. The distance $h_3$ is, in other words, the length $h_3$ of a hypotenuse $P_7P_9$ of a triangle $P_7P_8P_9$ (see FIGS. 24 and 25). Thereby, the camber $h_1$ can be calculated by substituting the obtained angle $\alpha$ and the distance $h_3$ into Equation (14).

[Equation 6]

$$h_1 = h_3 \bullet \cos \alpha \quad (14)$$

$$\alpha = \sin^{-1}\left(\frac{h_2 - y_4}{L}\right) \quad (15)$$

$$h_2 = \frac{R}{2} \cdot \sin \theta_2 - y_4 \quad (16)$$

$$x^2 + (y + b)^2 = L^2 \quad (17)$$

$$y_4 = \frac{-R\sin\theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - L^2\right)}}{2\left(1 - \frac{1}{\sin^2\theta_2}\right)} \quad (18)$$

$$y = \tan\alpha \bullet x + y_5 \quad (19)$$

$$x_7 = \frac{-2 \bullet y_5 \bullet \tan\alpha \pm \sqrt{4 \bullet y_5^2 \bullet \tan^2\alpha - 4(\tan^2\alpha + \sin^2\theta_2)\left(y_5^2 - \frac{R^2}{4}\sin^2\theta_2\right)}}{2(\tan^2\alpha + \sin^2\theta_2)} \quad (20)$$

$$4 \cdot y_5{}^2 \cdot \tan^2\alpha - 4(\tan^2\alpha + \sin^2\theta_2)\left(y_5{}^2 - \frac{R^2}{4}\sin^2\theta_2\right) = 0 \quad (21)$$

$$y_5 = -\frac{R}{2} \cdot \sqrt{\tan^2\alpha + \sin^2\theta_2} \quad (22)$$

$$h_3 = |y_5| - \left|-\frac{R}{2} \cdot \sin\theta_2\right| \quad (23)$$

Here, Equation (15) is a formula to find the angle $\alpha$ based on an inverse sine in a right triangle P3P4P6 (see Fig. 25), and the angle $\alpha$ can be calculated when $h_2$ and L are determined. The $h_2$ is a length of the side $P_4P_6$ of the right triangle P3P4P6, and can be determined by Equation (16): subtracting the absolute value $|y_4|$ of Y coordinates at the point $P_4$ from the absolute value $|-R/2 \cdot \sin\theta_2|$ of Y coordinates at the point $P_6$. The $y_4$ is the Y coordinates of the point $P_4$ between a virtual circle Cv of a radius L (see FIGS. 24 and 25) and the ellipse, and can be obtained by Equation (18) from Equation (17) for the virtual circle Cv and Equation (9) for the ellipse. Here, the minor diameter of the ellipse is $R/2 \cdot \sin\theta_2$, the Y coordinates of the point $P_3$ is $-R/2 \cdot \sin\theta_2$, and L is the scarf length of the scarf surfaces 92a, 92b, in other words, the length of the line segment Lcv1 which can be obtained by the above-described Equation (12). In addition, the i is the scarf ratio of the scarf surfaces 92a, 92b, and also the ratio (i = Ls/t) of a projected length Ls in a direction along the fiber direction FD in the projection of the scarf surfaces 92a, 92b, on the virtual projection plane when viewed from one side of the thickness t of the veneer 90, and the thickness t. The projected length Ls is the square root of the value (Ls = $\sqrt{(L^2 - t^2)}$) that is obtained by subtracting the square of the thickness t from the square of the scarf length L.

Equation (19) is a formula for the straight line Lt. Equation (20) is a formula for the X coordinates $x_7$ of the intersection point $P_7$ between the straight line Lt and the ellipse, which is obtained by using Equation (19) and Equation (9) for the ellipse. Equation (22) is a formula for the y intercept of Equation (19), that is, for the Y coordinates of the point $P_5$, which is obtained by using Equation (20) and Equation (21) that is a condition equation (discriminant) wherein the straight line Lt as a tangent to the ellipse. Equation (23) is a formula for the distance $h_3$ between the Y intercept $P_5$ of the straight line Lt and the intersection point $P_3$ between the ellipse and the Y axis (the distance $h_3$ is the length of the hypotenuse $P_7P_9$ of a triangle $P_7P_8P_9$).

Substitution of the angle $\alpha$ and the distance $h_3$ obtained from the Equations (15) and (23) into the Equation (14) leads to the value of the camber $h_1$ of the arc concavity 91.

In the scarfing machine 1 of the above modification also, a heeling angle $\theta_2$ is adjusted in order to obtain a desired camber $h_1$, and thereby scarf surfaces 92a, 92b can be machined in the veneer 90 at the heeling angle $\theta_2$. With the configuration, similar effects to those in the embodiment of the present invention are provided by the modification. For example, double cutting of the veneer 90 by the circular saw 20 (re-contacting of the blades 20b that machined the scarf surfaces 92a, 92b with the scarf surfaces 92a, 92b) can be well prevented; when the veneers 90 are joined together at the scarf surfaces 92a, 92b, the adhesive Ad can be well hindered from seeping out onto the surfaces of the veneers 90 (pocket effect); the scarf surfaces 92a, 92b can be properly joined together; and when the veneers 90 are joined to each other using a hot plate press, a hole Sh for appropriate steam release can be provided, which accelerates curing of the adhesive Ad.

According to the scarfing machine 1 of the modification, at the tips of the thinnest scarf surfaces 92a, 92b, the fiber direction FD of the veneer 90 and the acting direction of the cutting force FC can be identical to each other (see Fig. 21), and thereby the resistance at the time of cutting can be reduced. As a result, the tips of the thinnest scarf surfaces 92a, 92b are unlikely to break.

In the present embodiment, the pair of machining units 10, 10 supported by the supporting units 12, 14 is fixed to the base 2, and the pair of holding units 6, 6 are moved in the transfer direction TD of the veneer 90 (the longitudinal direction of the frame 4), but the present invention is not limited to this configuration. For example, a configuration is possible in which the pair of holding units 6, 6 is fixed to the base 2 or the frame 4, and the supporting units 12, 14 supporting the pair of machining units 10, 10 are moved in the transfer direction TD of the veneer 90 (the longitudinal direction of the frame 4).

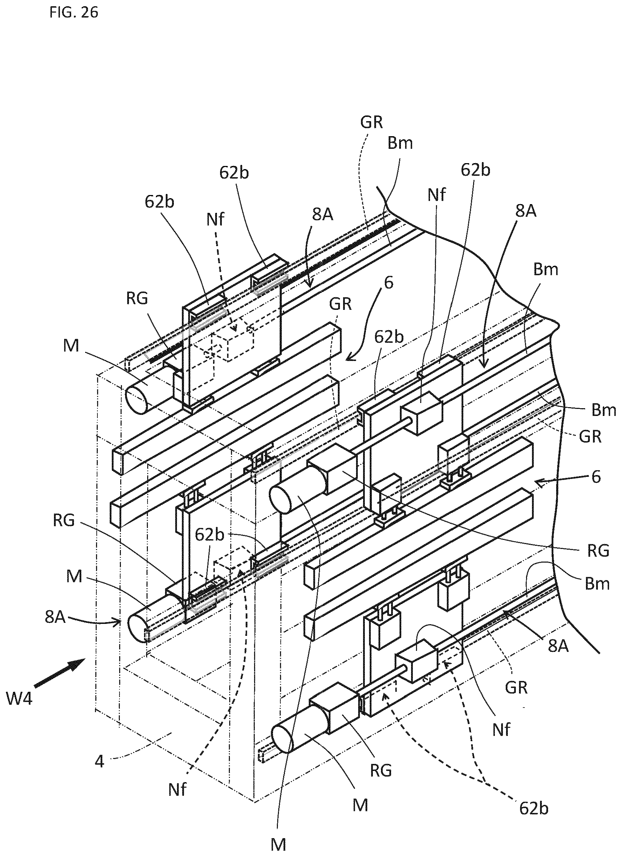

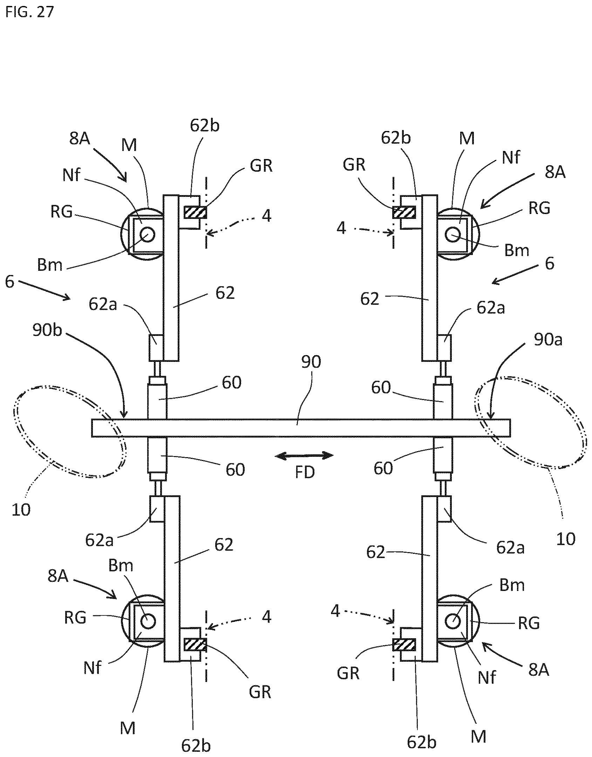

In the present embodiment, the driving unit 8 includes the endless belt BELT rotatably supported by the frame 4 via pulleys P, P, a gear mechanism RG (e.g., reduction gear) connected to a rotary shaft (not shown) of one of the pulleys, and a motor M connected to the rotary shaft (not shown) of the gear mechanism RG. Rotation of the endless belts BELT, BELT, BELT, BELT causes the pair of holding units 6, 6 fixed to the endless belts BELT, BELT, BELT, BELT to move in the transfer direction TD of the veneer 90 (the longitudinal direction of the frame 4), but the present invention is not limited to this configuration. For example, as a modified driving unit 8A shows in FIGS. 26 and 27, a configuration is possible in which a driving unit 8A includes a motor M supported by the frame 4, a gear mechanism RG (e.g., reduction gear) connected to a rotary shaft (not shown) of the motor M, a male threaded rod Bm connected to an output shaft (not shown) of the gear mechanism RG, and a female screw Nf engaged with the male threaded rod Bm. The male threaded rod Bm is rotatably supported by the frame 4, and the female screw Nf is fixed to the main plates 62, 62, 62, 62 of the pair of holding units 6, 6. The modified driving unit 8A is able to drive the motor M for forward and reverse rotation of the male threaded rod Bm, so that the pair of holding units 6, 6 is reciprocated in the transfer direction TD of the veneer 90 (the longitudinal direction of the frame 4) via the female screw Nf.

In the present embodiment, the clamping and releasing of the veneer 90 by the pair of upper and lower clamping bars 60, 60 is performed by the air cylinders 62a, 62a, 62a, 62, but the present invention is not limited to this configuration. For example, hydraulic cylinders may be used rather than the air cylinders 62a, 62a, 62a, 62a.

In the present embodiment, the reinforcing disc 24 is disposed only on the rear surface 21b of the circular saw 20, that is, on the side where the motor 22 is mounted, but another reinforcing disc 24 may be disposed on the front surface 21a of the circular saw 20 (see FIGS. 8 and 9), that is, on the side opposite the side where the motor 22 is mounted. With the configuration, the circular saw 20 can have a further enhanced stiffness against the bending force acting on it. The reinforcing disc 24 disposed on the front surface 21a of the circular saw 20 corresponds to the "second reinforcing disc" of the present invention, and the front surface 21a is one example of implemented configuration for the "second surface" of the present invention.

REFERENCE SIGNS LIST

| | |
|---|---|
| 1 | Scarfing machine (Scarfing machine) |
| 2 | Base |
| 4 | Frame |
| 6 | Holding unit (Holding unit) |
| 8 | Driving unit (Driving unit) |
| 8 | Driving unit (Driving unit) |
| 10 | Machining unit (Machining unit) |
| 12 | Supporting unit (Supporting unit) |
| 12a | Tilting table |
| 12b | Supporting table |
| 13 | Slope |
| 13a | Long hole |
| 14 | Supporting unit (Supporting unit) |
| 14a | Tilting table |
| 14b | Supporting table |
| 15 | Slope |
| 15a | Long hole |
| 16 | Pressing unit (Pressing unit) |
| 16a | Slope |
| 16b | Curved surface |
| 18 | Pressing unit (Pressing unit) |
| 18a | Slope |
| 18b | Curved surface |
| 20 | Circular saw (Cutter) |
| 20a | Through hole |
| 20b | Blades (Blades) |
| 21a | Front surface (Second surface) |
| 21b | Rear surface (First surface) |
| 22 | Motor (Motor) |
| 22a | Rotary shaft (Rotary shaft) |
| 24 | Reinforcing disc (First reinforcing disc) |
| 60 | Clamping bar |
| 62 | Main plate |
| 62a | Air cylinder |
| 62b | Guide portion |
| 62c | Fixing unit |
| 70 | Carry-in conveyor |

| | |
|---|---|
| 70a | Carry-in roller |
| 72 | Carry-out conveyor |
| 72a | Carry-out roller |
| 90 | Veneer (board material) |
| 90a | Edge (Edge of board material) |
| 90b | Edge (Edge of board material) |
| 91 | Arc concavity (arc concavity) |
| 92a | Scarf surface (scarf surface) |
| 92b | Scarf surface (scarf surface) |
| GR | Guide rail |
| BELT | Endless belt |
| P | Pulley |
| RG | Gear mechanism |
| M | Motor |
| BRKT | Bracket |
| BLT | Bolt |
| Bm | Male threaded rod |
| Nf | Femail screw |
| h | Camber (Camber) |
| $h_1$ | Camber (Camber) |
| $h_2$ | Length of side $P_4P_6$ |
| $h_3$ | Distance between Y intercept $P_5$ of straight line Lt and intersection point $P_3$ |
| Ad | Adhesive |
| Sh | Hole for steam release |
| L | Scarf length, length of line segment Lcv1 |
| t | Thickness of veneer (thickness of board material) |
| R | Diameter of circular saw (Diameter of cutter) |
| i | Scarf ratio (Scarf ratio) |
| FD | Fiber direction of veneer (Fiber direction of board material) |
| TD | Transfer direction of veneer |
| VL | Vertical line |
| $\theta_1$ | Scarf angle (First tilt angle) |
| $\theta_2$ | Heeling angle (Second tilt angle) |
| CLr | Rotation axis of circular saw (Rotation axis of cutter) |
| Cr | Center of ellipse (circular saw) |
| $P_1$ | End of projection of arc concavity |
| $P_2$ | End of projection of arc concavity |
| $P_3$ | End of projection of arc concavity, intersection point between ellipse and Y axis |
| $P_4$ | End of projection of arc concavity |
| $P_4'$ | End of projection of arc concavity |
| $P_5$ | Y intercept of straight line Lt |
| $P_6$ | Point forming the right angle of right triangle $P_3P_4P_6$ |
| $P_7$ | Intersection point between straight line Lt and ellipse |
| $P_8$ | Intersection point between straight line passing through point $P_7$ and orthogonal to line segment Lcv1 and line segment Lcv1 |
| $P_9$ | Intersection point between straight line passing through point $P_7$ and parallel to line segment Lcv1 and line segment Lcv1 |
| Lcv1 | Line segment connecting points $P_1$ and $P_2$ |
| Lcv2 | Line segment passing through Point $P_2$ and parallel to Y axis |
| Svc | Intersection point between line segment Lcv1 and Y axis |
| Ls | length of the scarf surface in projection |
| Fc | Cutting force |
| Fcp | Force component of cutting force |
| Lvh | Vertical binated division of line segment Lcv1 |
| $\alpha$ | Angle |
| Cv | Virtual circle having a radius L |

**Claims**

1. A scarfing machine (1) for machining a scarf surface at an edge of a wooden board material, the edge extending in a direction intersecting a fiber direction of the board material, the scarfing machine comprising:

   a holding unit (6) configured to hold the board material with at least the edge of the board material protruding;
   a machining unit (10) including a motor (22) having a rotary shaft (22a), and a disc cutter (20) having a plurality of blades (20b) and connected to the rotary shaft (22a), the machining unit (10) positioned such that, on a virtual projection plane when viewed from one side of the extending direction of the edge of the board material, a projection of the edge of the board material intersects with a projection of the cutter (20);
   a supporting unit (12, 14) configured to support the machining unit (10) in a state where the cutter (20) is tilted at a first tilt angle relative to the board material so as to obtain the scarf surface of a desired scarf ratio and also where the cutter (20) is tilted at a second tilt angle relative to the board material so as to set the cutter (20) to tilt downward in the direction of machining the scarf surface; and
   a driving unit mechanically connected to the holding unit (6) or the supporting unit (12, 14) and configured to move the holding unit (6) relative to the supporting unit (12, 14) or move the supporting unit (12, 14) relative to the holding unit (6) along the extending direction of the edge of the board material,
   wherein
   the second tilt angle has a value which has been calculated based on the relative positional relationship between a rotation axis of the cutter (20) and the scarf surface, a camber of the scarf surface having an arc concavity, the scarf ratio, a diameter of the cutter (20), and a thickness of the board material,
   **characterized in that**:

   the machining unit (10) is arranged such that the rotation axis of the cutter (20) passes through the center of an arc length of the scarf surface, and
   the second tilt angle has a value that satisfies the following Equation,
   [Equation 1]

$$h = \frac{R}{2} \bullet \sin\theta_2 - \sqrt{\sin^2\theta_2 \bullet \frac{R^2 - t^2(1 + i^2)}{4}} \quad (1)$$

   where $\theta_2$ is the second tilt angle, h is the camber desired, i is the scarf ratio desired, R is the diameter desired, and t is the thickness desired;
   or
   the machining unit (10) is arranged such that the rotation axis of the cutter (20) passes through the tip of the scarf surface, and
   the second tilt angle has a value that satisfies the following Equations (2) to (6),
   [Equation 2]

$$h_1 = h_3 \bullet \cos\alpha \quad (2)$$

$$\alpha = \sin^{-1}\left( \frac{\frac{R}{2} \bullet \sin\theta_2 - y_4}{t^2(i^2 + 1)} \right) \quad (3)$$

$$y_4 = \frac{-R\sin\theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - t^2(i^2 + 1)\right)}}{2\left(1 - \frac{1}{\sin^2\theta_2}\right)} \quad (4)$$

$$h_3 = |y_5| - \left| -\frac{R}{2} \bullet \sin \theta_2 \right| \quad (5)$$

$$y_5 = -\frac{R}{2} \bullet \sqrt{\tan^2\alpha + \sin^2\theta_2} \quad (6)$$

where $\theta_2$ is the second tilt angle, $h_1$ is the camber desired, i is the scarf ratio desired, R is the diameter desired, and t is the thickness desired.

2. The scarfing machine (1) according to claim 1, wherein
the plurality of blades (20b) is flat.

3. The scarfing machine (1) according to claim 1 or 2, wherein

   the cutter (20) has a first surface facing the board material and a second surface facing in the direction opposite to the first side, and
   the scarfing machine (1) further includes a first reinforcing disc (24) arranged in contact with the first surface.

4. The scarfing machine (1) according to claim 3, further comprising:
a second reinforcing disc (24) arranged in contact with the second surface.

5. The scarfing machine (1) according to any one of claims 1 to 4, further comprising:
a pressing unit (16, 18) positioned, in the vicinity of the cutter (20), upstream in the direction of machining the scarf surface with respect to the cutter (20), the pressing unit (16, 18) being configured to press the board material.

6. A method of machining a scarf surface at an edge of a wooden board material, the edge extending in a direction intersecting a fiber direction of the board material, the method comprising:

   (a) holding the board material with at least an edge of the board material protruding;
   (b) placing a disc cutter (20) having a plurality of blades (20b) such that, on a virtual projection plane when viewed from one side of the extending direction of the edge of the board material, a projection of the edge of the board material intersects a projection of the cutter (20);
   (c) calculating a second tilt angle of the cutter (20) with respect to the board material, based on the positional relationship between the rotation axis of the cutter (20) and the scarf surface, a camber of the scarf surface having an arc concavity, a scarf ratio of the scarf surface, a diameter of the cutter (20), and a thickness of the board material;
   (d) tilting the cutter (20) relative to the board material by a first tilt angle such that the scarf surface has a desired scarf ratio, and tilting the cutter (20) relative to the board material at the second tilt angle such that the cutter (20) is angled downward in the direction of machining the scarf surface; and
   (e) relatively moving the board material and the cutter (20) in the extending direction of the edge of the board material to machine the scarf surface along the edge of the board material,

   **characterized in that**:

   the step (b) includes a step of placing the cutter (20) such that the rotation axis of the cutter (20) passes through the center of an arc length of the scarf surface, and
   the step (c) is a step for calculating the second tilt angle that satisfies the following Equation,
   [Equation 3]

$$h = \frac{R}{2} \bullet \sin \theta_2 - \sqrt{\sin^2\theta_2 \bullet \frac{R^2 - t^2(1 + i^2)}{4}} \quad (7)$$

   where $\theta_2$ is the second tilt angle, h is the camber desired, i is the scarf ratio desired, R is the diameter desired, and t is the thickness desired; or

the step (b) includes a step of placing the cutter (20) such that the rotation axis of the cutter (20) passes through the tip of the scarf surface, and
the step (c) is a step for calculating the second tilt angle that satisfies the following Equations (8) to (12),
[Equation 4]

$$h_1 = h_3 \bullet \cos \alpha \quad (8)$$

$$\alpha = \sin^{-1}\left(\frac{\frac{R}{2} \bullet \sin \theta_2 - y_4}{t^2(i^2+1)}\right) \quad (9)$$

$$y_4 = \frac{-R\sin \theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - t^2(i^2+1)\right)}}{2\left(1 - \frac{1}{\sin^2\theta_2}\right)} \quad (10)$$

$$h_3 = |y_5| - \left|-\frac{R}{2} \bullet \sin \theta_2\right| \quad (11)$$

$$y_5 = -\frac{R}{2} \bullet \sqrt{\tan^2\alpha + \sin^2\theta_2} \quad (12)$$

where $\theta_2$ is the second tilt angle, $h_1$ is the camber desired, i is the scarf ratio desired, R is the diameter desired, and t is the thickness desired.

**Patentansprüche**

1. Schälmaschine (1) zum Bearbeiten einer Schälfläche an einer Kante eines Holzplattenmaterials, wobei sich die Kante in einer Richtung erstreckt, die eine Faserrichtung des Plattenmaterials schneidet, wobei die Schälmaschine aufweist:

   eine Halteeinheit (6), die konfiguriert ist, das Plattenmaterial so zu halten, dass mindestens die Kante des Plattenmaterials vorsteht;
   eine Bearbeitungseinheit (10), die einen Motor (22) mit einer Drehwelle (22a) und einen Scheibenschneider (20) mit mehreren Klingen (20b) aufweist, der mit der Drehwelle (22a) verbunden ist, wobei die Bearbeitungseinheit (10) so positioniert ist, dass auf einer virtuellen Projektionsebene, wenn sie von einer Seite der Erstreckungsrichtung der Kante des Plattenmaterials aus betrachtet wird, eine Projektion der Kante des Plattenmaterials eine Projektion des Schneiders (20) schneidet;
   eine Stützeinheit (12, 14), die konfiguriert ist, die Bearbeitungseinheit (10) in einem Zustand zu stützen, in dem der Schneider (20) in einem ersten Neigungswinkel relativ zu dem Plattenmaterial geneigt ist, um die Schälfläche eines gewünschten Schälverhältnisses zu erhalten, und außerdem in dem der Schneider (20) in einem zweiten Neigungswinkel relativ zu dem Plattenmaterial geneigt ist, um den Schneider (20) so einzustellen, dass er in der Richtung der Bearbeitung der Schälfläche nach unten kippt; und
   eine Antriebseinheit, die mechanisch mit der Halteeinheit (6) oder der Stützeinheit (12, 14) verbunden und konfiguriert ist, die Halteeinheit (6) relativ zu der Stützeinheit (12, 14) zu bewegen oder die Stützeinheit (12, 14) relativ zu der Halteeinheit (6) entlang der Erstreckungsrichtung der Kante des Plattenmaterials zu bewegen, wobei
   der zweite Neigungswinkel einen Wert hat, der basierend auf der relativen Positionsbeziehung zwischen einer Drehachse des Schneiders (20) und der Schälfläche, einer Wölbung der Schälfläche mit einer Bogenkonkavität, dem Schälverhältnis, einem Durchmesser des Schneiders (20) und einer Dicke des Plattenmaterials berechnet worden ist,

**dadurch gekennzeichnet, dass**:

die Bearbeitungseinheit (10) so angeordnet ist, dass die Drehachse des Schneiders (20) durch die Mitte einer Bogenlänge der Schälfläche verläuft, und der zweite Neigungswinkel einen Wert hat, der die folgende Gleichung erfüllt,

[Gleichung 1]

$$h = \frac{R}{2} \bullet \sin\theta_2 - \sqrt{\sin^2\theta_2 \bullet \frac{R^2 - t^2(1 + i^2)}{4}} \quad (1)$$

Wobei $\theta_2$ der zweite Neigungswinkel ist, h die gewünschte Wölbung ist, i das gewünschte Schälverhältnis ist, R der gewünschte Durchmesser ist und t die gewünschte Dicke ist;

oder

die Bearbeitungseinheit (10) so angeordnet ist, dass die Drehachse des Schneiders (20) durch die Spitze der Schälfläche verläuft, und

der zweite Neigungswinkel einen Wert hat, der die folgenden Gleichungen (2) bis (6) erfüllt,

[Gleichung 2]

$$h_1 = h_3 \bullet \cos\alpha \quad (2)$$

$$\alpha = \sin^{-1}\left( \frac{\frac{R}{2} \bullet \sin\theta_2 - y_4}{t^2(i^2 + 1)} \right) \quad (3)$$

$$y_4 = \frac{-R\sin\theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - t^2(i^2 + 1)\right)}}{2\left(1 - \frac{1}{\sin^2\theta_2}\right)} \quad (4)$$

$$h_3 = |y_5| - \left| -\frac{R}{2} \bullet \sin\theta_2 \right| \quad (5)$$

$$y_5 = -\frac{R}{2} \bullet \sqrt{\tan^2\alpha + \sin^2\theta_2} \quad (6)$$

wobei $\theta_2$ der zweite Neigungswinkel, $h_1$ die gewünschte Wölbung ist, i das gewünschte Schälverhältnis ist, R der gewünschte Durchmesser ist und t die gewünschte Dicke ist.

2. Schälmaschine (1) nach Anspruch 1, wobei die mehreren Klingen (20b) flach sind.

3. Schälmaschine (1) nach Anspruch 1 oder 2, wobei

der Schneider (20) eine erste Oberfläche, die zum Plattenmaterial weist, und eine zweite Oberfläche aufweist, die in die zur ersten Seite entgegengesetzte Richtung weist, und

die Schälmaschine (1) ferner eine erste Verstärkungsscheibe (24) aufweist, die in Kontakt mit der ersten Oberfläche angeordnet ist.

4. Schälmaschine (1) nach Anspruch 3, die ferner aufweist:

eine zweite Verstärkungsscheibe (24), die in Kontakt mit der zweiten Oberfläche angeordnet ist.

**5.** Schälmaschine (1) nach einem der Ansprüche 1 bis 4, die ferner aufweist:
eine Presseinheit (16, 18), die in der Nähe des Schneiders (20) stromaufwärts in der Bearbeitungsrichtung der Schälfläche in Bezug auf den Schneider (20) positioniert ist, wobei die Presseinheit (16, 18) konfiguriert ist, das Plattenmaterial zu pressen.

**6.** Verfahren zum Bearbeiten einer Schälfläche an einer Kante eines Holzplattenmaterials, wobei sich die Kante in einer Richtung erstreckt, die eine Faserrichtung des Plattenmaterials schneidet, wobei das Verfahren aufweist:

(a) Halten des Plattenmaterials, wobei mindestens eine Kante des Plattenmaterials vorsteht;
(b) Anordnen eines Scheibenschneiders (20) mit mehreren Klingen (20b), so dass auf einer virtuellen Projektionsebene, von einer Seite der Erstreckungsrichtung der Kante des Plattenmaterials aus gesehen, eine Projektion der Kante des Plattenmaterials eine Projektion des Schneiders (20) schneidet;
(c) Berechnen eines zweiten Neigungswinkels des Schneiders (20) in Bezug auf das Plattenmaterial, basierend auf der Positionsbeziehung zwischen der Drehachse des Schneiders (20) und der Schälfläche, einer Wölbung der Schälfläche mit einer Bogenkonkavität, einem Schälverhältnis der Schälfläche, einem Durchmesser des Schneiders (20) und einer Dicke des Plattenmaterials;
(d) Neigen des Schneiders (20) relativ zu dem Plattenmaterial um einen ersten Neigungswinkel, so dass die Schälfläche ein gewünschtes Schälverhältnis aufweist, und Neigen des Schneiders (20) relativ zu dem Plattenmaterial um den zweiten Neigungswinkel, so dass der Schneider (20) in der Richtung der Bearbeitung der Schälfläche nach unten abgewinkelt ist; und
(e) relatives Bewegen des Plattenmaterials und des Schneiders (20) in der Erstreckungsrichtung der Kante des Plattenmaterials, um die Schälfläche entlang der Kante des Plattenmaterials zu bearbeiten,

**dadurch gekennzeichnet, dass**:

der Schritt (b) einen Schritt des Platzierens des Schneiders (20) aufweist, so dass die Drehachse des Schneiders (20) durch die Mitte einer Bogenlänge der Schälfläche verläuft, und
der Schritt (c) ein Schritt des Berechnens des zweiten Neigungswinkels ist, der die folgende Gleichung erfüllt,
[Gleichung 3]

$$h = \frac{R}{2} \bullet \sin\theta_2 - \sqrt{\sin^2\theta_2 \bullet \frac{R^2 - t^2(1 + i^2)}{4}} \quad (7)$$

wobei $\theta_2$ der zweite Neigungswinkel ist, h die gewünschte Wölbung ist, i das gewünschte Schälverhältnis ist, R der gewünschte Durchmesser ist und t die gewünschte Dicke ist; oder
der Schritt (b) einen Schritt des Platzierens des Schneiders (20) aufweist, so dass die Drehachse des Schneiders (20) durch die Spitze der Schälfläche verläuft, und
der Schritt (c) ein Schritt des Berechnens des zweiten Neigungswinkels ist, der die folgenden Gleichungen (8) bis (12) erfüllt,
[Gleichung 4]

$$h_1 = h_3 \bullet \cos\alpha \quad (8)$$

$$\alpha = \sin^{-1}\left( \frac{\frac{R}{2} \bullet \sin\theta_2 - y_4}{t^2(i^2 + 1)} \right) \quad (9)$$

$$y_4 = \frac{-R\sin\theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - t^2(i^2 + 1)\right)}}{2\left(1 - \frac{1}{\sin^2\theta_2}\right)} \quad (10)$$

$$h_3 = |y_5| - \left| -\frac{R}{2} \bullet \sin\theta_2 \right| \quad (11)$$

$$y_5 = -\frac{R}{2} \bullet \sqrt{\tan^2\alpha + \sin^2\theta_2} \quad (12)$$

wobei $\theta_2$ der zweite Neigungswinkel ist, $h_1$ die gewünschte Wölbung ist, i das gewünschte Schälverhältnis ist, R der gewünschte Durchmesser ist und t die gewünschte Dicke ist.

## Revendications

**1.** Machine à biseauter (1) destinée à usiner une surface en biseau sur un bord d'un matériau pour planche de bois, ledit bord s'étendant dans une direction croisant la direction des fibres du matériau de planche, ladite machine à biseauter comprenant :

une unité de maintien (6) prévue pour maintenir le matériau de planche avec au moins le bord du matériau de planche en saillie ;
une unité d'usinage (10) comprenant un moteur (22) ayant un arbre rotatif (22a), et une fraise à disque (20) ayant une pluralité de lames (20b) et raccordée à l'arbre rotatif (22a), ladite unité d'usinage (10) étant positionnée de sorte que, sur un plan de projection virtuel vu d'un côté de la direction d'extension du bord du matériau de planche, une projection du bord du matériau de planche croise une projection de la fraise (20) ;
une unité de support (12, 14) prévue pour supporter l'unité d'usinage (10) dans un état où la fraise (20) est inclinée suivant un premier angle d'inclinaison par rapport au matériau de planche, de manière à obtenir la surface en biseau d'un rapport de biseau souhaité, et où la fraise (20) est en outre inclinée suivant un deuxième angle d'inclinaison par rapport au matériau de planche de manière à incliner la fraise (20) vers le bas dans la direction d'usinage de la surface en biseau ; et
une unité d'entraînement raccordée mécaniquement à l'unité de maintien (6) ou à l'unité de support (12, 14) et prévue pour déplacer l'unité de maintien (6) par rapport à l'unité de support (12, 14) ou pour déplacer l'unité de support (12, 14) par rapport à l'unité de maintien (6) dans la direction d'extension du bord du matériau de planche, où
le deuxième angle d'inclinaison a une valeur calculée sur la base de la relation de position relative entre l'axe de rotation de la fraise (20) et la surface en biseau, la courbure de la surface en biseau ayant une concavité en arc, le rapport de biseau, le diamètre de la fraise (20) et l'épaisseur du matériau de planche,
**caractérisée en ce que** :

l'unité d'usinage (10) est disposée de sorte que l'axe de rotation de la fraise (20) passe par le centre de la longueur d'arc de la surface en biseau, et
le deuxième angle d'inclinaison a une valeur satisfaisant à l'équation suivante,
[Équation 1]

$$h = \frac{R}{2} \bullet \sin\theta_2 - \sqrt{\sin^2\theta_2 \bullet \frac{R^2 - t^2(1 + i^2)}{4}} \quad (1)$$

où $\theta_2$ est le deuxième angle d'inclinaison, h la courbure souhaitée, i le rapport de biseau souhaité, R le diamètre souhaité et t l'épaisseur souhaitée ;
ou
l'unité d'usinage (10) est disposée de sorte que l'axe de rotation de la fraise (20) passe par l'extrémité de la surface en biseau, et
le deuxième angle d'inclinaison a une valeur satisfaisant aux équations (2) à (6) suivantes,
[Équation 2]

$$h_1 = h_3 \bullet \cos\alpha \quad (2)$$

$$\alpha = \sin^{-1}\left(\frac{\frac{R}{2} \bullet \sin\theta_2 - y_4}{t^2(i^2+1)}\right) \quad (3)$$

$$y_4 = \frac{-R\sin\theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - t^2(i^2+1)\right)}}{2\left(1 - \frac{1}{\sin^2\theta_2}\right)} \quad (4)$$

$$h_3 = |y_5| - \left|-\frac{R}{2} \bullet \sin\theta_2\right| \quad (5)$$

$$y_5 = -\frac{R}{2} \bullet \sqrt{\tan^2\alpha + \sin^2\theta_2} \quad (6)$$

où $\theta_2$ est le deuxième angle d'inclinaison, $h_1$ est la courbure souhaitée, i le rapport de biseau souhaité, R le diamètre souhaité et t l'épaisseur souhaitée.

2. Machine à biseauter (1) selon la revendication 1, où les lames de la pluralité de lames (20b) sont planes.

3. Machine à biseauter (1) selon la revendication 1 ou la revendication 2, où

   la fraise (20) présente une première surface opposée au matériau de planche et une deuxième surface orientée dans la direction opposée à la première surface, et
   la machine à biseauter (1) comprend en outre un premier disque de renforcement (24) en contact avec la première surface.

4. Machine à biseauter (1) selon la revendication 3, comprenant en outre :
   un deuxième disque de renforcement (24) en contact avec la deuxième surface.

5. Machine à biseauter (1) selon l'une des revendications 1 à 4, comprenant en outre :

   une unité de pression (16, 18) disposée à proximité de la fraise (20), en amont dans le sens d'usinage de la surface en biseau par rapport à la fraise (20),
   ladite unité de pression (16, 18) étant prévue pour comprimer le matériau de planche.

6. Procédé d'usinage d'une surface en biseau sur un bord d'un matériau pour planche de bois, ledit bord s'étendant dans une direction croisant la direction des fibres du matériau de planche, ledit procédé comprenant :

   (a) le maintien du matériau de planche avec au moins un bord du matériau de planche en saillie ;
   (b) la mise en place d'une fraise à disque (20) ayant une pluralité de lames (20b) de sorte que, sur un plan de projection virtuel vu d'un côté de la direction d'extension du bord du matériau de planche, une projection du bord du matériau de planche croise une projection de la fraise (20) ;
   (c) le calcul d'un deuxième angle d'inclinaison de la fraise (20) par rapport au matériau de planche, sur la base de la relation de position relative entre l'axe de rotation de la fraise (20) et la surface en biseau, de la courbure de la surface en biseau ayant une concavité en arc, du rapport de biseau de la surface en biseau, du diamètre de la fraise (20) et de l'épaisseur du matériau de planche ;
   (d) l'inclinaison de la fraise (20) par rapport au matériau de planche suivant un premier angle d'inclinaison de sorte que la surface en biseau présente un rapport de biseau souhaité, et l'inclinaison de la fraise (20) par rapport au matériau de planche suivant le deuxième angle d'inclinaison de manière à incliner la fraise (20) vers le bas dans la direction d'usinage de la surface en biseau ; et
   (e) le déplacement relatif du matériau de planche et de la fraise (20) dans la direction d'extension du bord du matériau de planche afin d'usiner la surface en biseau le long du bord du matériau de planche, **caractérisé en ce**

**que** :

l'étape (b) comprend une étape de mise en place de la fraise (20) de sorte que l'axe de rotation de la fraise (20) passe par le centre de la longueur d'arc de la surface en biseau, et
l'étape (c) est une étape de calcul du deuxième angle d'inclinaison satisfaisant à l'équation suivante,
[Équation 3]

$$h = \frac{R}{2} \bullet \sin \theta_2 - \sqrt{\sin^2\theta_2 \bullet \frac{R^2 - t^2(1 + i^2)}{4}} \quad (7)$$

où $\theta_2$ est le deuxième angle d'inclinaison, h la courbure souhaitée, i le rapport de biseau souhaité, R le diamètre souhaité et t l'épaisseur souhaitée ; ou
l'étape (b) comprend une étape de mise en place de la fraise (20) de sorte que l'axe de rotation de la fraise (20) passe par l'extrémité de la surface en biseau,
et
l'étape (c) est une étape de calcul du deuxième angle d'inclinaison satisfaisant aux équations (8) à (12) suivantes,
[Équation 4]

$$h_1 = h_3 \bullet \cos \alpha \quad (8)$$

$$\alpha = \sin^{-1}\left(\frac{\frac{R}{2} \bullet \sin \theta_2 - y_4}{t^2 (i^2 + 1)}\right) \quad (9)$$

$$y_4 = \frac{-R\sin \theta_2 + \sqrt{R^2\sin^2\theta_2 - 4\left(1 - \frac{1}{\sin^2\theta_2}\right)\left(\frac{R^2}{4}\sin^2\theta_2 + \frac{R^2}{4} - t^2 (i^2 + 1)\right)}}{2\left(1 - \frac{1}{\sin^2\theta_2}\right)} \quad (10)$$

$$h_3 = |y_5| - \left|-\frac{R}{2} \bullet \sin \theta_2\right| \quad (11)$$

$$y_5 = -\frac{R}{2} \bullet \sqrt{\tan^2\alpha + \sin^2\theta_2} \quad (12)$$

où $\theta_2$ est le deuxième angle d'inclinaison, $h_1$ la courbure souhaitée, i le rapport de biseau souhaité, R le diamètre souhaité et t l'épaisseur souhaitée.

FIG. 1

FIG. 2

FIG. 3

FIG. 4

FIG. 5

FIG. 6

FIG. 7

FIG. 8

FIG. 9

FIG. 10

FIG. 11A

FIG. 11B

FIG. 12

FIG. 13

FIG. 14

Y AXIS (CLr)

Cr(0, 0)

SI1(-L/2, 0)

SI2(L/2, 0)

X AXIS

$P_2(L/2, y1)$

Lcv2

20

Svc(0, y1)

91

Lcv1

h

$P_1(-L/2, y1)$

Sc $(0, -R/2 \cdot \sin\theta2)$

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3229732 A

- JP 2000000804 A